# EUROPÄISCHE PATENTSCHRIFT

(11) **EP 2 907 929 B1**
(45) Veröffentlichungstag und Bekanntmachung des Hinweises auf die Patenterteilung: **06.09.2017**
(21) Anmeldenummer: 14200092.6
(22) Anmeldetag: 23.12.2014
(51) Int. Cl.: E03C 1/04, F16L 25/01, F16L 37/23, F16L 37/36, F16L 37/53, E03C 1/05

(54) **Wasserauslaufanordnung und Sanitäreinrichtung mit einer Wasserauslaufanordnung**
Water outlet assembly and sanitary device with a water outlet assembly
Système d'évacuation d'eau et dispositif sanitaire doté d'un système d'évacuation d'eau

(30) Priorität: 31.12.2013 DE 102013115006
(43) Veröffentlichungstag der Anmeldung: 19.08.2015
(73) Patentinhaber: Gissmann, Frank, 10435 Berlin (DE)
(72) Erfinder: Gissmann, Frank, 10435 Berlin (DE)
(74) Vertreter: Zimmermann & Partner Patentanwälte mbB

(56) Entgegenhaltungen:
- EP-A1- 0 080 591
- EP-A1- 2 042 798
- EP-A1- 2 549 024
- WO-A1-2012/075593
- DE-A1- 4 433 812
- DE-A1-102007 010 964
- DE-A1-102009 019 933
- US-A- 6 006 784

## Beschreibung

### Hintergrund

Die vorliegende Erfindung betrifft eine Wasserauslaufanordnung und insbesondere eine Wasserauslaufanordnung mit einer Schnellkupplungsvorrichtung und einem Auslaufkörper, sowie eine Sanitäreinrichtung mit einer Wasserauslaufanordnung.

Aus der DE 10 2006 060 929 B4, DE 196 28 780 B4, DE 198 06 634 A1, US 6,006,784, DE 100 22 350 A1 und DE 43 14 101 A1 sind Wasserauslaufanordnungen mit Kupplungen bekannt. Diese sind jedoch nur bedingt für den praktischen Einsatz geeignet.

DE 44 33 812 A1 beschreibt für den Einsatz in einem Bewässerungssystem einen Schlauchanschluss mit Wasserstopp zum Anschluss eines Gartenschlauches an einen Anschlussnippel.

DE 10 2009 019933 A1 beschreibt ein Kupplungsstück eines Bewässerungs-Steckkupplungs-System mit einem Dichtkörper zum Sperren eines Strömungspfads.

EP 2 042 798 A1 beschreibt ebenfalls ein Kupplungssystem mit Sperrventil.

WO 2012/075593 A1 beschreibt einen ventillosen Armatursockel mit einem Drehsockel zum Aufstecken einer Armatur, der in einem Gehäuse des Armatursockels drehbar gelagert ist. Eine ventillose Armatur kann auf den Drehsockel aufgesteckt werden. Zwischen dem Drehsockel und der ventillosen Armatur ist eine elektrische Schnittstelle vorgesehen.

US 6 006 784 A beschreibt einen Wasserhahn mit Bajonettverschluss zum Anschluss an einen Wasserhahnanschluss.

DE 10 2007 010964 A1 beschreibt eine handgeführte Brause mit einem Bedienelement.

EP 2 549 024 A1 beschreibt einem flexiblen Schlauch mit Draht.

### Erfindungsgemäße Lösung

Es wird eine Wasserauslaufanordnung nach Anspruch 1 sowie Sanitäreinrichtungen nach Ansprüchen 6 und 8 bereitgestellt.

Gemäß einer Ausführungsform weist eine Wasserauslaufanordnung eine Schnellkupplungsvorrichtung mit einem ersten Kupplungsteil und einem zweiten Kupplungsteil auf, die mittels einer federbelasteten Kupplung lösbar miteinander verbindbar sind. Zum Kuppeln sind die beiden Kupplungsteile relativ zueinander längs einer Kupplungsachse bewegbar, bis die federbelastete Kupplung einrastet, wobei die beiden Kupplungsteile in gekuppeltem Zustand bei eingerasteter Kupplung frei gegeneinander drehbar sind, und das erste Kupplungsteil einen Strömungskanal mit Ventil aufweist, das in gekuppeltem Zustand der beiden Kupplungsteile geöffnet und in entkuppeltem Zustand der beiden Kupplungsteile geschlossen ist. Die Wasserauslaufanordnung weist weiterhin einen Auslaufkörper mit mindestens einem Sensor, Kamera und/oder Scanner und/oder mindestens einer Bedieneinheit auf, der mit dem zweiten Kupplungsteil lösbar verbunden ist. Das zweite Kupplungsteil ist in den Auslaufkörper eingesetzt.

Durch Verwendung der Schnellkupplung lässt sich die Wasserauslaufanordnung leicht und werkzeuglos montieren und demontieren. Dies kann auch bei anstehendem Wasserdruck erfolgen, da das erste Kupplungsteil ein Ventil aufweist, welches den Strömungskanal zulaufseitig sperrt, sobald die beiden Kupplungsteile voneinander getrennt werden.

Im Gegensatz zu bisherigen Lösungen wird bei den hier beschriebenen Ausführungsformen mittels einer federbelasteten Kupplung eine sichere Verbindung zwischen erstem und zweitem Kupplungsteil ermöglicht. Zum Kuppeln werden die beiden Kupplungsteile längs der Kupplungsachse, die typischerweise in Axialrichtung der Kupplungsteile verläuft, relativ aufeinander zubewegt, bis die federbelastete Kupplung einrastet. Die federbelastete Kupplung sperrt im eingerasteten Zustand eine relative Bewegung der beiden Kupplungsteile zueinander in Axialrichtung (in Richtung der Kupplungsachse). In gekuppeltem Zustand können die beiden Kupplungsteile frei gegeneinander verdreht werden. Es ist aber auch möglich, Anschläge vorzusehen, welche die freie Drehbewegung begrenzen.

Die grundsätzlich freie Drehbewegung gestattet es, dass der Auslaufkörper nach Bedarf in die gewünschte Richtung gedreht werden kann, beispielsweise relativ zu einem Waschbecken. Dies ist bei bisher verwendeten Bajonettverschlüssen oder anderen Drehverschlüssen nicht möglich, da eine Drehbewegung hier unmittelbar die Gefahr einer Entkupplung oder eines Lösens mit sich bringt.

Zum Entkuppeln kann der Auslaufkörper mit zweitem Kupplungsteil längst der Kupplungsachse abgezogen werden, wobei sich dabei automatisch das Ventil im ersten Kupplungsteil schließt. Das Entkuppeln kann, genauso wie das Kuppeln, werkzeuglos erfolgen. Dadurch ist ein bequemeres Reinigen und/oder Desinfizieren von Sanitäreinrichtungen und der Wasserauslaufanordnung möglich.

Der Auslaufkörper ist lösbar mit dem zweiten Kupplungsteil verbunden und kann daher ausgetauscht werden. Ebenso kann natürlich das zweite Kupplungsteil ausgetauscht werden. Durch diese Zweiteilung wird ebenfalls die Reinigung und Wartung erleichtert.

Die Schnellkupplung ist bevorzugt als Steckkupplung ausgeführt. Das Kuppeln und Entkuppeln erfolgt dabei lediglich durch Bewegungen längs der Kupplungsachse. Drehbewegungen sind für das Kuppeln und Entkuppeln nicht erforderlich.

Diese Form der mechanischen Kupplung hat den Vorteil, dass ein Verdrehen des zweiten Kupplungsteils relativ zum ersten Kupplungsteil nicht zu einem versehentlichen Lösen der Schnellkupplung führt, wie es beispielsweise bei Bajonettverschlüssen der Fall sein kann. Es ist nämlich deutlich wahrscheinlicher, dass bei der Benutzung der Auslaufkörper versehentlich verdreht wird oder einen Schlag in Drehrichtung erhält, als dass der Auslaufkörper versehentlich gegen einen erhöhten Widerstand abgezogen wird.

Die federbelastete Kupplung weist mindestens ein mittels eines Federelements vorgespanntes Rastelement auf, das im ersten oder zweiten Kupplungsteil gelagert ist und in gekuppeltem Zustand in eine umlaufende Aufnahme (Rastelementaufnahme) des anderen der beiden Kupplungsteile eingreift, um eine Relativbewegung der beiden Kupplungsteile zueinander in Richtung der Kupplungsachse zu sperren, ohne die freie Drehbarkeit einzuschränken.

Das Rastelement, beispielsweise in Form einer Kugel oder eines Stifts, kann in eine radial umlaufende Nut oder Vertiefung eingreifen und dadurch eine axiale Relativbewegung der beiden Kupplungsteile entlang der Kupplungsachse sperren. Die Stärke des Kupplungswiderstandes der Kupplung kann beispielsweise durch die Federkraft und Form von Rastelement und Aufnahme eingestellt werden.

Die Kupplung kann beispielsweise als "Klick"-Kupplung ausgeführt sein, die eine Relativbewegung der beiden Kupplungsteile entlang der Kupplungsachse ermöglicht, bis das Rastelement in die Aufnahme einrastet und dabei "klickt". Die hierbei erfolgende Rastbewegung des Rastelements kann im Wesentlichen senkrecht zur Kupplungsachse verlaufen, oder auch zu dieser unter einem Winkel ungleich 90° stehen. Dadurch ist es möglich, dass zum Kuppeln beispielsweise eine geringere Kraft erforderlich ist, als zum Entkuppeln, wodurch die Sicherheit der Schnellkupplungsanordnung verbessert wird.

Gemäß einer Ausführungsform können zwei oder mehrere Rastelemente vorgesehen sein, welche in eine gemeinsame Rastelementaufnahme, beispielsweise in Form einer umlaufenden Nut, eingreifen. Es ist auch möglich, dass zwei oder mehrere Rastelemente vorgesehen sind, die in jeweils eigene Rastelementaufnahmen, beispielsweise in zueinander beabstandete umlaufende Nuten eingreifen. Ebenso ist eine Kombination dieser Varianten möglich.

Gemäß einer Ausführungsform weist das Ventil des ersten Kupplungsteils einen axial bewegbaren Ventilkörper auf, der in ungekuppeltem Zustand der beiden Kupplungsteile federbelastet gegen einen im ersten Kupplungsteil angeordneten Ventilsitz drückt und in gekuppeltem Zustand der beiden Kupplungsteile durch das zweite Kupplungsteil aus seinem Ventilsitz gedrückt wird.

Das Ventil verschießt den im ersten Kupplungsteil verlaufenden Strömungskanal, der auch als zulaufseitiger Strömungskanal bezeichnet werden kann. Typischerweise wird der Ventilkörper in Richtung der Kupplungsachse während des Kupplungsvorgangs aus seinem Ventilsitz gedrückt und öffnet damit den Strömungskanal. Ein Federelement kann dieser Bewegung entgegenwirken. Beim Entkuppeln sorgt dann das Federelement für einen sofortigen Verschluss des zulaufseitigen Strömungskanals.

Gemäß einer Ausführungsform weist das zweite Kupplungsteil einen Strömungskanal mit Ventil auf, das in gekuppeltem Zustand der beiden Kupplungsteile geöffnet und in entkuppeltem Zustand der beiden Kupplungsteile geschlossen ist. Damit wird auch ablaufseitig ein sicherer Verschluss ermöglicht, sodass kein Wasserrückfluss der im Auslaufkörper eventuell befindlichen Wassersäule erfolgt, was im Reinigungs- und Wartungsfall von Vorteil ist. Der ablaufseitige Strömungskanal kann damit ebenfalls gesperrt werden.

Gemäß einer Ausführungsform weist das Ventil des zweiten Kupplungsteils einen axial bewegbaren Ventilkörper auf, der in ungekuppeltem Zustand der beiden Kupplungsteile federbelastet gegen einen im zweiten Kupplungsteil angeordneten Ventilsitz drückt und in gekuppeltem Zustand der beiden Kupplungsteile durch das erste Kupplungsteil aus seinem Ventilsitz gedrückt wird. Das Ventil im zweiten Kupplungsteil kann ähnlich wie das Ventil im ersten Kupplungsteil aufgebaut sein. Typischerweise wird der Ventilkörper im zweiten Kupplungsteil zum Öffnen jedoch in entgegengesetzter Richtung im Vergleich zum Ventilkörper im ersten Kupplungsteil bewegt. Beim Kuppeln können die beiden Ventilkörper gegeneinander wirken und sich gegenseitig aus ihrem jeweiligen Ventilsitz drücken.

Die beiden Ventile können auch unterschiedlich zueinander aufgebaut sein. Insbesondere ist das Ventil im ersten Kupplungsteil so aufgebaut, dass es den anstehenden Wasserdruck sicher sperren kann.

Der Auslaufkörper weist weiterhin mindestens eine Bedieneinheit und/oder mindestens einen Sensor, Kamera und/oder Scanner auf, die mit einer Übertragungsanordnung zur Übertragung von Signalen zwischen den beiden Kupplungsteilen oder zwischen dem ersten Kupplungsteil und dem Auslaufkörper verbunden ist oder sind.

Die Bedienung der Wasserauslaufanordnung kann beispielsweise durch Tasten oder berührungsempfindliche Bedienoberflächen erfolgen. Diese können in den Auslaufkörper integriert sein. Die Übertragungsanordnung überträgt die von der Bedieneinheit erzeugten Signale vom zweiten Kupplungsteil auf das erste Kupplungsteil, von wo es geeignet, beispielsweise mittels einer Signalleitung oder kabellos, an eine Steuerungseinrichtung weitergeleitet werden kann. Die Übertragungsanordnung kann auch der Stromversorgung der Bedieneinheit dienen.

Die Übertragungsanordnung kann als elektrische Übertragungsanordnung, als induktive Übertragungsanordnung, als elektromagnetische Übertragungsanordnung, und/oder als optische Übertragungsanordnung ausgebildet sein. Die zu übertragenden Signale sind dann entsprechend elektrische, magnetische, elektromagnetische und/oder optische Signale. Die dabei verwendeten Kopplungen können galvanischer, induktiver, ohmscher, optischer oder elektromagnetischer Natur sein.

Gemäß einer Ausführungsform kann im ersten Kupplungsteil und/oder im zweiten Kupplungsteil und/oder im Auslaufkörper mindestens ein Sensor (Messaufnehmer) angeordnet sein. Bei dem Sensor kann es sich um einen Temperatur- und/oder einen Druck- und/oder einen pH- und/oder einen Durchflusssensor handeln. Dieser kann ebenfalls mit der Übertragungsanordnung verbunden sein, damit eine Übertragung von Sensorsignalen zur Steuerungseinrichtung erfolgen kann. Beispielsweise kann dadurch die Wassertemperatur sehr nahe am Auslauf des Auslaufkörpers gemessen und zur genaueren Regelung der Wassertemperatur durch die Steuerungseinrichtung verwendet werden.

Der mindestens eine Sensor kann alternativ oder zusätzlich auch mit einer drahtlosen Kommunikationseinrichtung verbunden sein, die im oder am Auslaufkörper, im ersten oder zweiten Kupplungsteil angeordnet ist. Damit ist beispielsweise eine Fernabfrage des Sensors oder auch eine Integration in eine zentrale Steuerungsanlage möglich. Die Fernabfrage kann kontaktlos, beispielsweise mittels WLAN, Bluetooth, NFC oder Transpondertechnologie, oder auch kontaktbehaftet erfolgen.

Bevorzugt ist die Sensorik, insbesondere zur Erfassung der Wassertemperatur, der Durchflussmenge, des pH-Wertes, anderer Parameter (Hautbild, Körpertemperatur etc.) beim Nutzer selbst sowie des aktuellen Schaltzustandes ("AN/AUS") im Auslaufkörper integriert.

Gemäß einer Ausführungsform ist der Messaufnehmer ein Näherungssensor, der die Bedieneinheit und/oder die Beleuchtung derselben und/oder die Wasserzufuhr in Abhängigkeit davon, ob ein Objekt in der Nähe ist, aktiviert. Ein Näherungssensor kann aber auch Teil der Bedieneinheit sein, oder diese darstellen. Beispielsweise kann die Bedieneinheit lediglich durch einen Näherungssensor gebildet werden, wenn beispielsweise lediglich eine Kaltwasserabgabe oder die Abgabe von Wasser einer vorbestimmten Temperatur gewünscht ist. Dabei kann jeweils die bei der letzten Bedienung eingestellte Wassertemperatur oder eine wahlweise in einer Mischeinrichtung einprogrammierte Wassertemperatur aktiviert werden. Die Wassertemperatur kann unabhängig davon generell in einer Mischeinrichtung eingestellt werden, die mit dem Näherungssensor gekoppelt und mit dem ersten Kupplungsteil verbunden ist.

Gemäß einer Ausführungsform ist zusätzlich zur Bedieneinheit ein Näherungssensor beispielsweise am Auslaufkörper vorgesehen.

Gemäß einer Ausführungsform ist eine Anzeigeeinrichtung am oder im Auslaufkörper angeordnet, die mit der Übertragungsanordnung verbunden ist. Damit können Informationen, beispielsweise über die Wassertemperatur und/oder die Durchflussmenge und/oder den pH-Wert an den Benutzer ausgegeben werden.

Gemäß einer Ausführungsform weist die Übertragungsanordnung mindestens ein Kontaktelement auf, das am ersten Kupplungsteil angeordnet ist und in gekuppeltem Zustand der Schnellkupplungsvorrichtung in eine Ringnut mit innenliegendem Kontakt eingreift, die im zweiten Kupplungsteil oder Auslaufkörper ausgebildet ist.

Die Ringnut ist typischerweise an der zum ersten Kupplungsteil weisenden Seite angeordnet. Das Kontaktelement am ersten Kupplungsteil greift in die Ringnut ein und führt dadurch zu einem elektrischen Kontakt. In der Ringnut können ein oder mehrere Kontakte, beispielsweise in Form von Kontaktringen, angeordnet sein. Das Kontaktelement kann federbehaftete Kontakte aufweisen, um einen sicheren elektrischen Kontakt zu gewährleisten. Durch die Ringnut und das in diese eingreifende Kontaktelement wird sichergestellt, dass die elektrischen Kontakte geschützt sind. Außerdem bleibt der elektrische Kontakt auch bei Verdrehen der beiden Kupplungsteil relativ zueinander erhalten. Die Ringnut kann aber auch am ersten Kupplungsteil und das Kontaktelement am zweiten Kupplungsteil angeordnet sein.

Gemäß einer Ausführungsform überträgt die Übertragungsanordnung kontaktlos die Signale zwischen erstem und zweitem Kupplungsteil oder zwischen erstem Kupplungsteil und Auslaufkörper. Dies kann beispielsweise induktiv erfolgen. Hierzu kann eine Spule, beispielsweise konzentrisch um das erste Kupplungsteil verlaufend, in eine entsprechende ringförmige Vertiefung im zweiten Kupplungsteil oder Auslaufkörper zum Liegen kommt, wenn die beiden Kupplungsteile gekuppelt sind. Koaxial zu dieser Spule ist dann eine Spule im zweiten Kupplungsteil oder Auslaufkörper angeordnet. Es ist jedoch auch möglich, eine induktive Kopplung ohne Ausbildung einer ringförmigen Vertiefung zu erreichen, wenn beispielsweise beide Spulen sehr nah an der jeweiligen Oberfläche des jeweiligen Kupplungsteils angeordnet sind. Auch ist es möglich, dass unter Verwendung einer Vertiefung die eine Spule radial von der anderen Spule in gekuppeltem Zustand der Schnellkupplungsvorrichtung umgeben ist, wobei sowohl die in der Vertiefung liegende Spule die Außen- oder auch die Innenspule bilden kann.

Alternativ kann die kontaktlose Signalübertragung mittels Funktechnik, beispielsweise WLAN, Bluetooth, NFC oder Transpondertechnologie, erfolgen.

Weiterhin ist es möglich, die Übertragungsvorrichtung als optische Übertragungsvorrichtung zur Übertragung von optischen Signalen auszubilden. Dies kann beispielsweise mittels eines optischen Senders (LED, Laser, OLED) und eines entsprechenden Empfängers erfolgen, der beispielsweise in einen Acryl- oder Glasring eingelassen oder mit diesem optisch gekoppelt ist. Der Acryl- oder Glasring leitet die optischen Signale unabhängig von der aktuellen Drehstellung zum Empfänger.

Gemäß einer Ausführungsform weist die Wasserauslaufanordnung weiterhin eine Kommunikationseinrichtung zur Fernabfrage der Wasserauslaufanordnung auf. Diese kann, wie oben beschrieben, mit entsprechenden Sensoren in der Wasserauslaufanordnung und/oder der Bedieneinheit in Verbindung stehen. Die Kommunikationseinrichtung kann eine kontaktlose und/oder kontaktbehaftete Kommunikation ermöglichen.

Gemäß einer Ausführungsform weist das erste Kupplungsteil einen Kupplungsstift, einen zulaufseitigen Anschluss und einen Flansch zwischen dem Kupplungsstift und dem zulaufseitigen Anschluss auf. Das zweite Kupplungssteil weist eine Kupplungsstiftaufnahme auf, in welcher der Kupplungsstift axial einführbar ist.

Das erste Kupplungsteil kann beispielsweise an oder in eine Sanitäreinrichtung, wie beispielsweise ein Waschbecken, Waschtisch oder Konsole, befestigt oder integriert sein. Der Kupplungsstift ragt dann aus der Sanitäreinrichtung heraus. Damit kann eine Vertiefung oder Hohlraum mit einem Totvolumen vermieden werden. Dies ist insbesondere in hygienischer Hinsicht von Vorteil, da hier kein Wasser in solchen "Totvolumina" verbleibt, in dem sich Bakterien oder Legionellen entwickeln können. Vielmehr kann die Sanitäreinrichtung bündig mit dem Flansch abschließen.

Gemäß einer Ausführungsform kann der Auslaufkörper zumindest teilweise oder vollständig aus einem Mineralwerkstoff, keramischen Werkstoff, Glasverbundwerkstoff, Metall, Kunststoff oder einem Verbund aus mindestens zwei der genannten Materialien bestehen. Der Auslaufkörper kann am Auslaufende typischerweise einen austauschbaren und modifizierbaren Luftsprudler oder Mischdüse aufnehmen. Als Beispiel wird auf die unter dem Handelsnamen PERLATOR vertriebenen Strahlregler verwiesen.

Die Ausbildung des Auslaufkörpers kann unabhängig von der Materialwahl für die Schnellkupplungsvorrichtung erfolgen. So ist es beispielsweise möglich, den Auslaufkörper aus einem Mineralwerkstoff zu formen und damit praktisch beliebige äußere Formen zu erzielen. Das Design, die Farbe und die Haptik des Auslaufkörpers können dadurch an die Sanitäreinrichtung angepasst werden oder zu dieser gezielt kontrastieren.

Bevorzugt nimmt der Auslaufkörper das zweite Kupplungsteil vollständig auf, sodass dieses in gekuppeltem Zustand nicht mehr sichtbar ist. Dies ist neben ästhetischen Gesichtspunkten auch aus Sicht eine leichten Reinigung und Handhabung von Vorteil.

Gemäß einer Ausführungsform weist eine Sanitäreinrichtung ein Sanitärbecken, eine Wasserauslaufanordnung, und eine Mischeinrichtung auf. Die Mischeinrichtung weist zumindest einen ersten Zulauf, einen zweiten Zulauf, und mindestens einen Mischwasserablauf auf, wobei das erste Kupplungsteil der Schnellkupplungsvorrichtung der Wasserauslaufanordnung mit dem Mischwasserablauf der Mischeinrichtung verbunden ist.

Bei der Sanitäreinrichtung kann es sich beispielsweise um ein Handwaschbecken, eine Badewanne, ein Bidet, oder eine Dusche handeln. Das Sanitärbecken wird dann von dem eigentlichen Waschbeckenkörper, dem Badewannenkörper, der Duschtasse oder Duschwanne, oder dem fest verlegten Fußboden mit Auslass gebildet. Das erste Kupplungsteil kann fest mit der Sanitäreinrichtung, beispielsweise im Sanitärbecken, in einer Wand oder einer Konsole, montiert sein. Mittels der lösbaren Schnellkupplung lässt sich der Auslaufkörper vom ersten Kupplungsteil abnehmen.

Die Mischeinrichtung kann eine Steuereinrichtung, wie weiter oben beschrieben, umfassen. Beispielsweise kann das eigentliche Bereitstellen des Nutzwassers, d.h. das Einstellen des gewünschten Drucks, der Durchflussmenge, des pH-Werts und der gewünschten Temperatur, durch die Mischeinrichtung erfolgen. Damit sind keine Betätigungsventile im Bereich des Auslasskörpers erforderlich, sodass der Auslasskörper kompakt ausgeführt werden kann. Die im Auslasskörper untergebrachte Schnellkupplungsvorrichtung kann ebenfalls sehr kompakt sein. Außerdem ist es so möglich, den anstehenden Wasserdruck zu reduzieren, da in vielen Fällen ein auslassseitiger Wasserdruck von 1 bar völlig ausreicht.

Im Hauswasserbereich beträgt der Leitungsdruck dagegen typischerweise zwischen 3 und 6 bar. In der Mischeinrichtung kann somit der Leitungsdruck auf Nutzwasserdruck reduziert und ggf. konstant gehalten werden. Eine Druckreduzierung durch die Mischeinrichtung ist aber nicht erforderlich, da die Schnellkupplungsvorrichtung typischerweise deutlich höhere Drücke toleriert bzw. dafür ausgelegt ist.

Gemäß einer Ausführungsform kann die Mischeinrichtung eine Entsalzungseinrichtung aufweisen oder mit dieser verbunden sein. Damit kann beispielsweise das von der Mischeinrichtung abgegebene Wasser auf einen gewünschten Härtegrad eingestellt werden. Der Härtegrad kann auch im Betrieb durch entsprechende Mischung von entsalztem und nicht-entsalztem Wasser geändert werden. Außerdem kann durch die Mischeinrichtung die gezielte Zugabe von Salzen gesteuert werden.

Gemäß einer Ausführungsform weist die Mischeinrichtung weiterhin einen Steueranschluss auf, der mit dem Kontaktelement des ersten Kupplungsteils beispielsweise über eine Signalleitung verbunden ist. Damit kann die Mischeinrichtung direkt vom Auslaufkörper bedient und gesteuert werden.

Gemäß einer Ausführungsform weist eine Sanitäreinrichtung einen Schlauch, der auf einer Seite mit dem ersten Kupplungsteil der Wasserauslaufanordnung der Schnellkupplungsvorrichtung verbunden ist, und auf der anderen Seite eine Handbrause auf, welche den mit dem zweiten Kupplungsteil verbundenen Auslaufkörper bildet.

Die Sanitäreinrichtung kann daher auch einen flexiblen Teil aufweisen. Ein leichtes Abnehmen der Handbrause wird durch die Schnellkupplung zwischen Schlauch und Auslaufkörper ermöglicht. Sofern der Auslaufkörper über Bedienelemente verfügt, kann der Benutzer beispielsweise direkt mit der Hand, in welcher er die Handbrause hält, die Wassertemperatur und den Auslaufdruck steuern. Separate Bedienelemente, wie Wasserhähne oder dergleichen, sind nicht erforderlich.

Gemäß einer Ausführungsform weist der Schlauch mindestens eine Signalleitung auf, welche mit dem Kontaktelement des ersten Kupplungsteils verbunden ist.

Die Signalleitung kann zu einer Mischeinrichtung führen, welche bspw. zum Einstellen des Wasserdrucks und der Temperatur dient.

Die Signalleitung kann ein Kabel oder auch ein Lichtwellenleiter sein. Beide lassen sich gut in Schläuche integrieren. Im Falle eines Lichtwellenleiters kann dieser einfach in die Ummantelung eingegossen oder eingeflochten werden. Für Kabel kann beispielsweise ein Metall- oder leitfähiges Kunststoffgeflecht verwendet werden, dass zur Druckstabilisierung von Schläuchen verwendet wird. Durch Verwendung mehrerer voneinander isolierter Metall- oder Kunststoffgeflechte kann ein mehradriges Kabel gebildet werden.

Gemäß einer Ausführungsform weist die Sanitäreinrichtung weiterhin eine Kommunikationseinrichtung zur kontaktlosen und/oder kontaktbehafteten Fernabfrage der Mischeinrichtung auf. Dies ist bei allen hier beschriebenen Sanitäreinrichtungen möglich.

Gemäß einer Ausführungsform weist eine Sanitäreinrichtung ein Sanitärbecken und eine Wasserauslaufanordnung auf. Die Auslaufanordnung weist einen Zulauf auf, wobei das erste Kupplungsteil der Schnellkupplungsvorrichtung mit einer Kalt-, Warm- oder Mischwasseranschlussleitung verbunden ist.

Gemäß einer Ausführungsform weist eine Schnellkupplungsvorrichtung ein erstes Kupplungsteil und ein zweites Kupplungsteil auf, die mittels einer federbelasteten Kupplung lösbar miteinander verbindbar sind. Zum Kuppeln sind die beiden Kupplungsteile relativ zueinander längs einer Kupplungsachse bewegbar, bis die federbelastete Kupplung einrastet, wobei die beiden Kupplungsteile in gekuppeltem Zustand bei eingerasteter Kupplung frei gegeneinander drehbar sind, und das erste Kupplungsteil einen Strömungskanal mit Ventil aufweist, das in gekuppeltem Zustand der beiden Kupplungsteile geöffnet und in entkuppeltem Zustand der beiden Kupplungsteile geschlossen ist. Die Schnellkupplungsvorrichtung weist weiterhin eine Übertragungsanordnung zur Übertragung von Signalen zwischen den beiden Kupplungsteilen auf.

Die vorliegende Beschreibung umfasst auch eine Schnellkupplungsvorrichtung mit Übertragungsanordnung, insbesondere mit elektrischer Übertragungsanordnung. Solche Schnellkupplungsvorrichtungen können als Bausatz bereitgestellt werden, mit beispielsweise genormten Anschlüssen, um einen beliebigen Auslaufkörper an beispielsweise das zweite Kupplungsteil anzuschließen oder das zweite Kupplungsteil in den Auslaufkörper einzusetzen. Je nach Betrachtung ist daher entweder der Auslaufkörper oder die Schnellkupplungsvorrichtung austauschbar. Der Auslaufkörper kann separat als optionales Bauteil zur Verfügung gestellt oder individuell angefertigt werden. Beispielsweise ist es möglich, den Auslaufkörper mittels eines generativen oder additiven Fertigungsverfahrens, z.B. mittels eines 3D-Druckers, individuell herzustellen.

Die Befestigung zwischen zweitem Kupplungsteil und Auslasskörper kann drehsicher ausgebildet sein.

Gemäß einer Ausführungsform weist die Übertragungsanordnung mindestens ein Kontaktelement auf, das am ersten Kupplungsteil angeordnet ist und in gekuppeltem Zustand der Schnellkupplungsvorrichtung in eine Ringnut mit innenliegendem Kontakt eingreift, die im zweiten Kupplungsteil ausgebildet ist.

Gemäß einer Ausführungsform ist die Übertragungsanordnung zur kontaktlosen Übertragung von Signalen zwischen erstem und zweitem Kupplungsteil ausgebildet.

Gemäß einer Ausführungsform weist das zweite Kupplungsteil mindestens eine Kontakteinheit auf, die mit der Übertragungsanordnung verbunden ist.

Gemäß einer Ausführungsform weist ein Wasserschlauch ein erstes Kupplungsteil einer Schnellkupplungsvorrichtung an seinem ersten Ende und ein zweites Kupplungsteil einer Schnellkupplungsvorrichtung an seinem Ende auf. Die beiden Kupplungsteile können miteinander gekuppelt werden und sind in gekuppeltem Zustand gegeneinander frei drehbar. Das erste Kupplungsteil ist mit einem Ventil ausgestattet. Das zweite Kupplungsteil kann ebenfalls mit einem Ventil ausgestattet sein.

Der Wasserschlauch kann damit mit seinem zweiten Ende beispielsweise mit einem festinstallierten ersten Kupplungsteil und mit seinem ersten Ende mit einem zweiten Kupplungsteil, beispielsweise eines Auslaufkörpers oder eines anderen Wasserschlauchs, gekuppelt werden. Somit ist es möglich, beispielsweise die Mischeinrichtung mit einem ersten Kupplungsteil zu versehen an dem der Wasserschlauch mit seinem zweiten Ende (zweites Kupplungsteil) befestigt wird. Der Wasserschlauch kann dann mit einem festinstallierten Adapter verbunden sein, der beispielsweise ein erstes und zweites Kupplungsteil aufweist. Das zweite Kupplungsteil des festinstallierten Adapters dient dann zum Verbinden mit dem Wasserschlauch während das erste Kupplungsteil des festinstallierten Adapters zum Anschluss eines Auslaufkörpers, wie weiter oben beschrieben, oder eines Duschwasserschlauchs dient.

Außerdem kann der Wasserschlauch als Duschwasserschlauch ausgebildet sein und eine lösbare Verbindung zwischen einem festinstallierten Anschluss mit erstem Kupplungsteil und dem als Handbrause ausgebildeten Auslaufkörper mit zweiten Kupplungsteil herstellen.

Damit kann insgesamt ein modulares System auf Basis von Schnellkupplungsvorrichtungen geschaffen werden.

Der Schlauch kann Signalleitungen, wie oben beschrieben, aufweisen. Die Kupplungsteile verfügen dann über die entsprechenden Übertragungsanordnungen bzw. Kontakte, die mit den Signalleitungen verbunden sind.

Die hier beschriebenen Ausführungsformen von Wasserauslaufanordnung, Schnellkupplungsvorrichtung und Sanitäreinrichtung können sowohl im Privatbereich als auch im öffentlichen Bereich eingesetzt werden. Beispielsweise können Sanitäreinrichtungen in Hotels oder Gaststätten mit derartigen Wasserauslaufanordnungen ausgestattet werden. Weiterhin ist es möglich, derartige Wasserauslaufanordnungen im industriellen oder medizinischen Umfeld einzusetzen. Insbesondere die leichte Austauschbarkeit, das Entkoppeln und die räumliche Trennung von Wasserauslauf und Mischeinrichtung, die Vermeidbarkeit von Stufen, Kanten oder Fugen im Bereich des Auslaufkörpers und die damit einhergehende erleichterte Reinigung, sowie die schnelle Kupplungs- und Entkupplungsmöglichkeit unter Eigensperrung des Zulaufs sind einige der Vorteile, die einen Einsatz in diesen Bereichen ermöglichen. Zum anderen reduziert sich der Installationsaufwand, da nicht bis zu jedem Auslaufkörper (Wasserhahn) Kalt- und Warmwasserleitungen zu installieren sind.

Die vorstehend beschriebenen Ausführungsformen können beliebig miteinander kombiniert werden.

### Kurzbeschreibung der Figuren

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu.

Gleiche Bezugszeichen bezeichnen entsprechend ähnliche Teile.
Figur 1 zeigt eine Sanitäreinrichtung mit einer Wasserauslaufanordnung gemäß einer Ausführungsform.
Figur 2 zeigt eine Schnellkupplungsvorrichtung gemäß einer Ausführungsform, die in eine Sanitäreinrichtung integriert ist.
Figur 3 zeigt eine perspektivische Explosionsdarstellung der Schnellkupplungsvorrichtung aus Figur 2.
Figur 4 zeigt eine Wasserauslaufanordnung gemäß einer Ausführungsform.
Figur 5 zeigt eine perspektivische Explosionsdarstellung der Wasserauslaufanordnung aus Figur 4.
Figur 6 zeigt eine Wasserauslaufanordnung gemäß einer weiteren Ausführungsform.
Figur 7 zeigt eine perspektivische Explosionsdarstellung der Wasserauslaufanordnung aus Figur 6.
Figur 8 zeigt eine Wasserauslaufanordnung gemäß einer weiteren Ausführungsform.

### Ausführungsbeispiele

Die hier beschriebenen Ausführungsformen und Ausführungsbeispiele betreffen eine Wasserauslaufanordnung, die mit einer Schnellkupplung versehen ist und die eine Montage und/oder Demontage werkzeuglos durch ein federbelastetes Kupplungssystem ermöglicht.

Die Montage erfolgt durch eine axiale Bewegung, die die beiden Kupplungsteile miteinander verbindet und auch mittels einer axialen Bewegung wieder entkoppelt.

Die Wasserauslaufanordnung ist gemäß hier beschriebener Ausführungsformen in gekuppeltem und betriebsfähigem Zustand vollständig dreh- und schwenkbar, da die beiden Kupplungsteile eine freie Verdrehbarkeit in gekuppeltem Zustand gewährleisten.

Bei der Demontage wird die Wasserzufuhr zulaufseitig (eigensicher) gesperrt. Die Wasserauslaufanordnung kann mindestens einen beispielsweise elektrischen/optischen/induktiven Kontakt zur Übertragung von elektrischen, elektromagnetischen, optischen und induktiven und Signalen aufweisen.

Die Wasserauslaufanordnung umfasst eine Schnellkupplungsvorrichtung, die vorzugsweise in Edelstahl, Messing, einem Kunststoff, oder einem Mineral- oder Glaswerkstoff ausgeführt sein kann, und dem eigentlichen Auslaufkörper, der in jeder Form, die zum Wasserauslauf geeignet scheint, aus den gleichen oder anderen Materialien ausgeführt werden kann. Die so gebildete Auslaufgarnitur aus Schnellkupplungsvorrichtung und Auslaufkörper kann aus verchromtem oder lackiertem Messing, aus Edelstahl oder aber aus Kunststoff, Keramik, Glas- oder Mineralwerkstoffen bestehen. Diese Auslaufgarnitur kann auch mittels additiven Fertigungsverfahren, die auch als 3D-Druck bezeichnet werden können, individuell hergestellt und dann mit der Schnellkupplung zusammengesetzt werden. Der Auslaufkörper kann z.B. als Wasserauslauf an einem Waschtisch, innerhalb eines Regals oder Konsole und über einem Waschtisch oder einer Badewanne und auch als Duschkopf eingesetzt werden. Alle diese Auslaufkörper können Sensoren und Schaltflächen, die die Auslaufmenge, pH-Wert, Temperatur oder/und zeitliche Algorithmen für den Wasserdurchfluss steuern/regeln, enthalten.

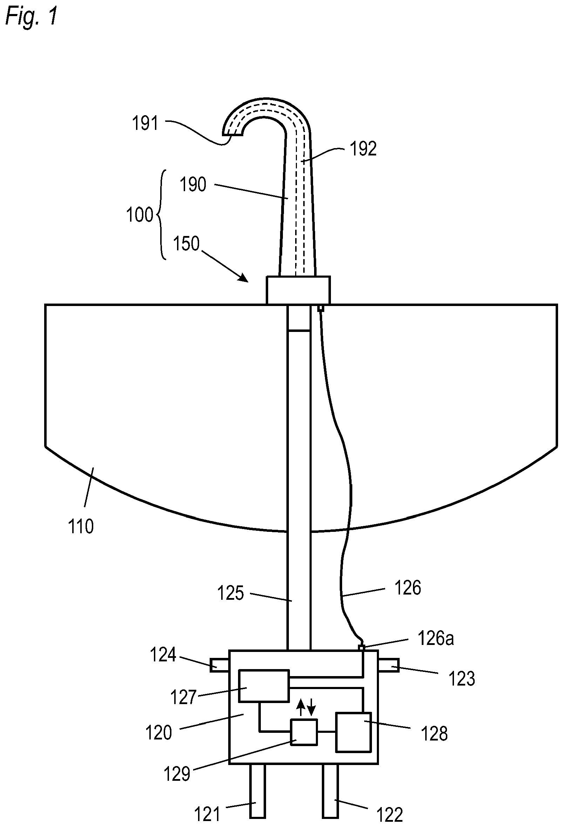

Figur 1 zeigt eine Sanitäreinrichtung am Beispiel eines Waschbeckens 110. Am Waschbecken 110 ist ein Auslaufkörper 190 in Form eines beliebig gestaltbaren Wasserauslaufs über eine Schnellkupplung oder Steckkupplung 150 mit einem Wasserzulauf oder Mischwasserzulauf 125 verbunden. Die Schnellkupplung 150 bildet die Schnellkupplungsvorrichtung. Im Weiteren wird der Begriff Schnellkupplung verwendet.

Der Auslaufkörper 190 bildet zusammen mit der Schnellkupplung 150 eine Wasserauslaufanordnung 100. Der Auslaufkörper 190 kann in jeder beliebigen Form ausgebildet sein. Typischerweise weist der Auslaufkörper 190 einen Strömungskanal 192 auf, der von der Schnellkupplung 150 zu einer Auslauföffnung 191 führt.

Der Mischwasserzulauf 125 verbindet die Schnellkupplung 150 mit einer Mischeinrichtung 120, die unterhalb des Waschbeckens 110 oder hinter einer Wand installiert werden kann. Die Mischeinrichtung 120 kann mindestens zwei Zuläufe 121 und 122 aufweisen, typischerweise für Warm- und Kaltwasser. Neben dem mindestens einen zentralen Mischwasserzulauf 125 zur Schnellkupplung 150 kann die Mischeinrichtung 120 weitere Zuläufe 123, 124 für andere Sanitäreinrichtungen aufweisen. Aus Sicht der Mischeinrichtung 120 stellt der Michwasserzulauf 125 zur Schnellkupplung 150 einen Mischwasserablauf dar, da das Mischwasser hier aus der Mischeinrichtung 120 abfließt. Daher werden diese Begriffe nachfolgend auch synonym verwendet.

Die Mischeinrichtung 120 kann mindestens einen Steuereingang 126a aufweisen, der beispielsweise über eine Signalleitung 126 mit Kontakten der Schnellkupplung 150 elektrisch verbunden sein kann. Dadurch können Steuersignale von einer Bedieneinheit des Auslaufkörpers 190, wie weiter unten beschrieben, zur Mischeinrichtung 120 und insbesondere zu einer darin befindlichen Steuereinrichtung 127 geführt werden.

Weiterhin kann die Mischeinrichtung 120 mindestens einen Sensor (Messaufnehmer) 129 sowie eine Kommunikationseinrichtung 128 zur kontaktlosen und/oder kabelgebundenen Kommunikation mit einer Fernabfrageeinrichtung, einem Wartungsgerät, oder einer zentralen Steuerungs- und Überwachungseinheit aufweisen. Der Sensor 129, oder die Sensoren 129, können mit der Kommunikationseinrichtung 128 und/oder der Steuereinrichtung 127 gekoppelt sein.

Mittels der Fernabfrage kann beispielsweise die verbrauchte Wassermenge, getrennt nach Warm- und Kaltwasser, erfasst und übermittelt werden. Auch kann der aktuelle Benutzungszustand abgefragt werden, beispielsweise um zentral ein Signal zu erzeugen, wenn die Wasserzufuhr nicht mehr benutzt oder aber länger als eine vorgegebene Zeitspanne geöffnet ist. Dies kann beispielsweise in Pflegeheimen von Vorteil sein, um sicherzustellen, dass der/die Bewohner/in vital sind und der Zulauf nicht versehentlich offengelassen wurde und dadurch einen Wasserschaden verursacht wird.

Gemäß einer Ausführungsform kann im Auslaufkörper auch eine Kamera oder/und ein Scanner integriert sein, der die Körperteile (Hand, Haut, Arm udgl.) einscannt oder fotografiert und dann per Fernabfrage weiterleitet. Dies kann beispielsweise zur Diagnostik, beispielsweise in der klassischen chinesischen Medizin, oder zur Messung des pH-Werts auf der Haut und/oder der Körpertemperatur sowie anderer physiologischer Parameter verwendet werden.

Die Steuereinrichtung 127 kann daher direkt mit der Kommunikationseinrichtung 128 für derartige Fernabfragen verbunden sein.

Die Mischeinrichtung 120 verfügt weiterhin über hier nicht dargestellte Ventile zum Mischen von Warm- und Kaltwasser. Diese Ventile werden bevorzugt von der Steuereinheit 127 angesteuert, welche gleichzeitig eine Regelung der jeweiligen Wassermengen zur Beibehaltung einer vorgegebenen Wassertemperatur am Mischwasserzulauf 125 ermöglicht. Außerdem kann die Steuereinheit 127 über Einrichtungen zur Abarbeitung von Algorithmen zur zeitlichen Steuerung des Wasserdurchflusses und der Temperatur verfügen, um die Durchflussmenge und die Wassertemperatur gemäß einem vorgegebenen zeitlichen Profil zu regeln.

Die Mischeinheit 120 kann auch jeden Mischwasserzulauf 123, 124, 125 einzeln oder in Gruppen ansteuern und die jeweilige Durchflussmenge und Temperatur einzeln oder in Gruppen regeln bzw. steuern.

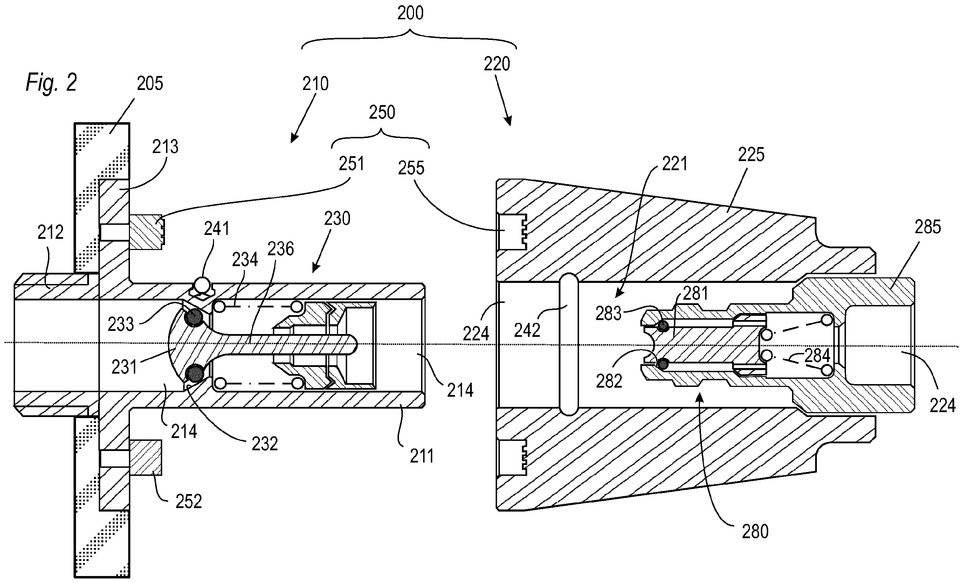

Figur 2 zeigt gemäß einer Ausführungsform eine Schnellkupplung 200 in Form einer Steckkupplung, die in eine Sanitäreinrichtung integriert ist.

Die Schnellkupplung 200 umfasst ein erstes Kupplungsteil 210 und ein zweites Kupplungsteil 220. Das erste Kupplungsteil 210 ist hier fest installiert, beispielsweise in einem Waschbecken 205 einer Sanitäreinrichtung. Das erste Kupplungsteil 210 ragt dann senkrecht aus der Oberfläche des Waschbeckens 205 heraus. Es ist ebenfalls möglich, dass das erste Kupplungsteil 210 in einer Wand oder einer Konsole integriert und beispielsweise horizontal oder unter einem Winkel eingebaut ist.

Das erste Kupplungsteil 210 umfasst einen hohlen Kupplungsstift 211, einen zulaufseitigen Anschluss 212 und einen Flansch 213, der in dieser Ausführungsform zwischen dem Kupplungsstift 211 und dem zulaufseitigen Anschluss 212 angeordnet ist. Ein Strömungskanal 214 durchsetzt zentral das erste Kupplungsteil 210. Der zulaufseitigen Anschluss 212 kann als Gewindeanschluss zur Aufnahme einer fest installierten Wasserleitung, zur Montage an einem Waschtisch, Regal, Konsole oder Badewanne ausgebildet sein, oder zum Verbinden mit einem Schlauch, beispielsweise mittels eines Adapters dienen.

Das zweite Kupplungsteil 220 umfasst einen Körper 225, in dem eine Kupplungsstiftaufnahme 221 ausgebildet ist. Gleichzeitig bildet die Kupplungsstiftaufnahme 221 auch einen Strömungskanal 224 im zweiten Kupplungsteil 220.

Zum Kuppeln werden die beiden Kupplungsteile 210, 220 längs einer Kupplungsachse, die hier durch die gepunktete Linie angedeutet ist, aufeinander zubewegt. Dabei wird der Kupplungsstift 211 in die Kupplungsstiftaufnahme 221 eingeführt, bis ein an der Außenseite des Kupplungsstifts 211 angeordnetes federbelastetes Rastelement 241 in eine dafür an der Innenseite der Kupplungsstiftaufnahme 221 vorgesehene Rastelementaufnahme 242 eingreift. Dabei erfolgt die Bewegung des Rastelements 241 typischerweise radial nach Außen. Es ist auch möglich, die Anordnung von Rastelement 241 an der Innenseite der Kupplungsstiftaufnahme 221 und von der Rastelementaufnahme 242 an der Außenseite des Kupplungsstifts 211 vorzusehen. Dann erfolgt die Bewegung des Rastelements 241 beim Einrasten radial nach Innen.

Die Kupplungsachse verläuft typischerweise in Axialrichtung der beiden Kupplungsteile.

Als Rastelement 241 oder Rastelemente 241 eignen sich insbesondere Kugeln oder auch Stifte mit einer abgerundeten Spitze. Mittels der Formgebung von Rastelement 241 und Rastelementaufnahme 242 sowie der Stärke der Federvorspannung lässt sich der Kraftaufwand für das Kuppeln und Entkuppeln einstellen. Dies dient auch der Sicherheit der Schnellkupplung.

Zum Entkuppeln muss lediglich das zweite Kupplungsteil 220 unter Überwindung eines definierbaren Widerstandes längs der Kupplungsachse abgezogen werden.

Im gekuppelten Zustand ist das zweite Kupplungsteil 220 vollständig frei gegen das erste Kupplungsteil 210 drehbar, da das Rastelement 241 in der umlaufenden Rastelementaufnahme 242 der Drehung folgen kann, ohne die Kupplungswirkung zu verlieren.

Zur Sicherstellung der freien Drehbarkeit genügt es, wenn der Kupplungsstift 211 einen im Wesentlichen kreiszylinderförmigen Außenquerschnitt und die Kupplungsstiftaufnahme 221 einen im Wesentlichen kreiszylinderförmigen Innenquerschnitt aufweist. Die äußere Form des zweiten Kupplungsteils 220 muss dagegen nicht kreiszylinderförmig oder rotationssymmetrisch sein. Jedoch ist eine rotationssymmetrische Außenform bevorzugt. In der hier gezeigten Ausführungsform ist der Körper 225 des zweiten Kupplungsteils 220 kegelstumpfförmig.

Die Arretierung der beiden Kupplungsteile 210, 220 erfolgt bevorzugt über federbelastete Kugeln 241, die im ersten Kupplungsteil 210 gelagert und in die hier als umlaufende Nut ausgebildete Rastelementaufnahme 242 in dem zweiten Kupplungsteil 220 einrasten. Zum Entkuppeln wird das zweite Kupplungsteil 220 dann axial gegen den Federwiderstand der Federn, welche die Kugeln 241 in die Nut 242 drücken, abgezogen.

Beide Kupplungsteile 210, 220 verfügen über Ventile oder Ventileinsätze 230, 280, die in den jeweiligen Strömungskanälen 214, 224 eingesetzt sind und diese verschließen.

Das Ventil 230 im ersten Kupplungsteil weist einen Ventilkörper 231 auf, der unter einer mittels eines Federelements 234 erzeugten Vorspannung in Richtung zum zweiten Kupplungsteil 220 gegen einen Ventilsitz 232 gedrückt wird. Ggf. kann eine austauschbare Dichtung 233, beispielsweise in Form einer Ringdichtung, am Ventilkörper 231 angeordnet sein, die dann vom Ventilkörper 231 gegen den Ventilsitz 232 gepresst wird. Der Ventilkörper 231 weist weiterhin einen Ventilstößel 236 auf, der in Richtung zum zweiten Kupplungsteil 220 weist.

Das Ventil 280 im zweiten Kupplungsteil 220 ist in einem Ventileinsatz 285 untergebracht, der von der zum ersten Kupplungsteil 210 abgewandten Seite des Strömungskanals 224 in diesen beispielsweise eingeschraubt oder darin eingepresst sein kann. Das Ventil 280 weist ebenfalls einen Ventilkörper 281 auf, der mittels eines Federelements 284, das sich gegen den Ventileinsatz 285 abstützt, in Richtung zum ersten Kupplungsteil 210 gegen einen Ventilsitz 282 gedrückt wird. Auch hier kann eine Ringdichtung oder ein anderes Dichtungselement 283 zwischen dem Ventilsitz 282 und dem Ventilkörper 281 vorgesehen sein.

Im zweiten Kupplungsteil 220 ist daher ein Einsatz oder Ventileinsatz 285 vorgesehen, der in Durchflussrichtung einen federbelasteten Verschluss oder Ventil 280 zur Absicherung gegen Rückfluss von stromabwärts zum zweiten Kupplungsteil 220 enthaltenem Wasser dient. Beim axialen Zusammenführen des zweiten Kupplungsteils 220 mit dem ersten Kupplungsteil 210 drückt der obere Ventileinsatz 285 mittels seines in Kupplungsbewegungsrichtung vorgespannten Ventilkörpers 281 gegen den Ventilstößel 236 im ersten Kupplungsteil 210. Dabei drücken sich beide Ventilkörper 231, 281 aus ihren jeweiligen Ventilsitzen 232, 282 heraus und öffnen ihre jeweiligen Strömungskanäle 214, 224. Dadurch wird der Durchfluss im ersten Kupplungsteil 210 freigegeben. Gleichzeitig überwindet der durch den Ventilstößel 236 bewegte Ventilkörper 281 die Federkraft im Ventileinsatz 285 und gibt auch hier den Strömungskanal 224 frei. Die so geöffneten Strömungskanäle 214, 224 bilden damit eine gemeinsame durchgehende Durchströmungsöffnung. Das Wasser kann nun die Schnellkupplung 200 durchströmen.

Mittels der jeweils eingestellten Federkraft der Federelemente 234 und 284 öffnen die Ventile 230, 280 zeitgleich oder auch nacheinander.

Wie in Figur 2 erkennbar, hat der Ventileinsatz 285 an seiner zum ersten Kupplungsteil 210 weisenden Seite eine stiftartige Außenform, um in den Strömungskanal 214 des ersten Kupplungsteils 214 eingreifen zu können.

Die Ventile 230 und 280 sind ebenfalls bevorzugt rotationssymmetrisch aufgebaut.

Die Schnellkupplung 200 umfasst weiterhin eine Übertragungsanordnung 250, um beispielsweise elektrische Signale zwischen den beiden Kupplungsteilen 210, 220 auszutauschen. Die Übertragungsanordnung kann eine optische, ohmsche, galvanische, induktive oder elektromagnetische Signalübertragung ermöglichen.

Dazu können im zweiten Kupplungsteil 220 beispielsweise Verbindungskontakte in einer Ringnut 255 angeordnet sein, die umlaufend an der zum ersten Kupplungsteil 210 weisenden Seite ausgebildet ist. Das erste Kupplungsteil 210 hat ebenfalls Verbindungskontakte, beispielsweise in Form eines erhabenen Kontaktrings 251, der in die Ringnut 255 des zweiten Kupplungsteils 220 eingreift, wenn beide Kupplungsteile 210, 220 miteinander gekuppelt sind. An der zum zweiten Kupplungsteil 220 weisenden Seite kann der Kontaktring 251 mehrere konzentrisch verlaufende Kontakte aufweisen, die zu entsprechenden Verbindungskontakten in der Ringnut korrespondieren und in diese im gekuppelten Zustand eingreifen. Aufgrund der ringförmigen Ausgestaltung von Ringnut 255 und Kontaktring 251 ist die freie Drehbarkeit des zweiten Kupplungsteils 220 gegenüber dem ersten Kupplungsteil 210 weiterhin möglich. Dadurch ist in jeder beliebigen Drehstellung eine Signalübertragung möglich.

Anstelle eines Kontaktrings 251 kann auch ein Kontaktstift 252 im ersten Kupplungsteil 210 vorgesehen sein. Dies ist im unteren Teil des ersten Kupplungsteils 210 als Alternative dargestellt.

Die Kontakte können auch federbelastet sein, um einen sicheren elektrischen Kontakt zu gewährleisten.

Günstig ist, wenn die Kontakte auf Seiten des ersten Kupplungsteils 210 erhaben gegenüber dem Flansch 213 sind und in die Ringnut 255 oder eine andere geeignete Vertiefung eingreifen. Dadurch sind die Kontakte weitgehend geschützt. Ist das erste Kupplungsteil 210 beispielsweise senkrecht in einem Waschbecken 205 oder dergleichen integriert, liegen die Kontakte oberhalb der Oberfläche des Waschbeckens. Zum weiteren Schutz können auch zusätzliche Dichtungen vorgesehen werden.

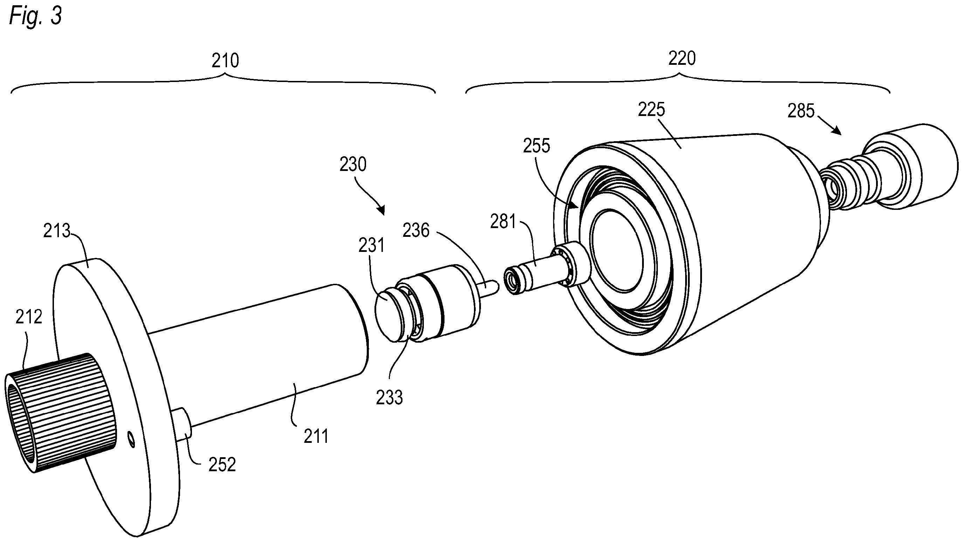

Figur 3 zeigt die Schnellkupplung 200 aus Figur 2 in einer perspektivischen Darstellung. Erkennbar ist hier insbesondere die Anordnung der Ringnut 255 mit den innenliegenden Kontaktringen. Die Schnellkupplung ist hier in einem nicht-montierten Zustand gezeigt, d.h. das erste Kupplungsteil 210 ist nicht an einer Sanitäreinrichtung befestigt.

Das Ventil 230 wird als Einsatz von der zum zweiten Kupplungsteil 220 weisenden Seite in den Strömungskanal 214 eingesetzt, d.h. in den Kupplungsstift 211 eingeschoben und darin beispielsweise verpresst oder eingeschraubt.

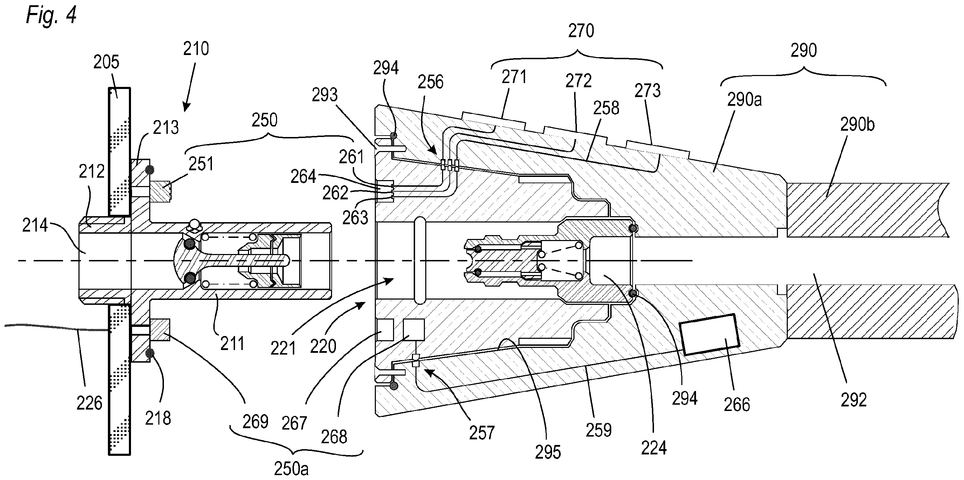

Figur 4 zeigt eine Wasserauslaufanordnung gemäß einer weiteren Ausführungsform. Die hier verwendete Schnellkupplung entspricht im Wesentlichen der in den Figuren 2 und 3 gezeigten Schnellkupplung, so dass lediglich die Unterschiede erläutert werden.

Die Wasserauslaufanordnung bildet eine Auslaufgarnitur, die drei Teile umfasst, und zwar das erste Kupplungsteil 210, das zweite Kupplungsteil 220 und einen Auslaufkörper 290, der mit dem zweiten Kupplungsteil 220 lösbar verbunden ist.

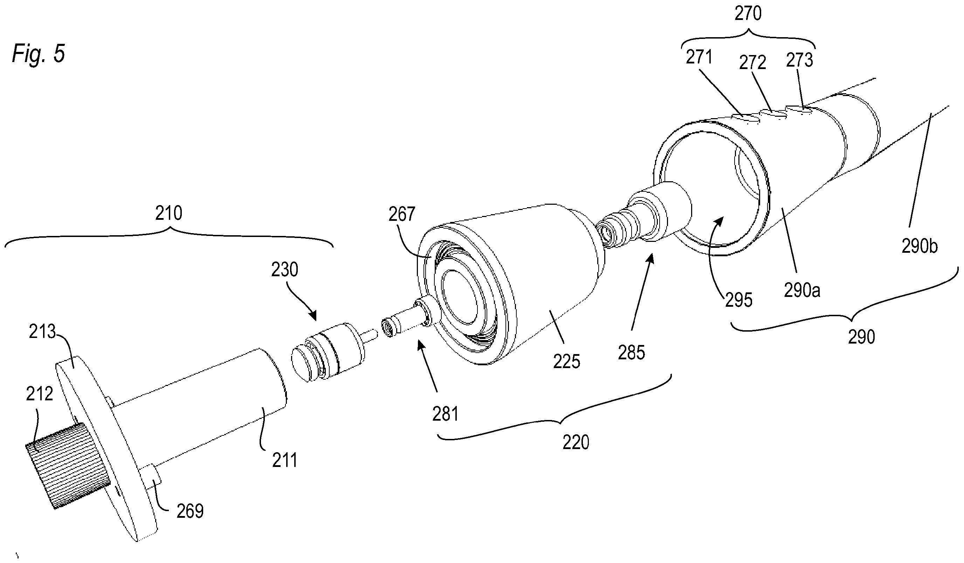

Der in Figur 5 gezeigte Auslaufkörper 290 kann aus einem oder auch aus mehreren Teilen bestehen. Konkret besteht er in dieser Ausführungsform aus einem Grundkörper 290a und einem Auslauf 290b. Der Grundkörper 290a verfügt über eine Aufnahme oder einen Aufnahmeraum 295 zur bevorzugt vollständigen Aufnahme des zweiten Kupplungsteils 220. Die Aufnahme 295 ist in Figur 5 deutlich zu erkennen. Die innere Form der Aufnahme 295 kann an die äußere Form des zweiten Kupplungsteils 220 angepasst werden. Beispielsweise kann das zweite Kupplungsteil 220 in die Aufnahme 295 drehfest eingesteckt werden und darin mittels Fixierelementen 293, beispielsweise in Form von Schrauben, befestigt sein. Um eine drehfeste Verbindung zwischen dem zweiten Kupplungsteil 220 und dem Auslaufkörper 290 zu verbessern, können formschlüssige, beispielsweise in axialer Richtung verlaufende Verbindungselemente wie Längsnuten und Längsrippen vorgesehen sein. Diese sichern auch eine genaue relative Lage von zweitem Kupplungsteil 220 und Grundkörper 290a zueinander, was für die elektrische Verbindung von Vorteil ist, wie weiter unten beschrieben.

Der Auslaufkörper 290 kann daher im Allgemeinen mittels Schrauben bzw. Steck - oder/und Schraubverbindung mit dem zweiten Kupplungsteil 220 verbunden sein.

Es ist ebenfalls möglich, dass das zweite Kupplungsteil 220 in den Auslaufkörper 290 eingeklebt wird. Dann ist jedoch der problemlose Austausch des zweiten Kupplungsteils 220, oder des Auslaufkörpers 290, nur noch bedingt gegeben.

Über Dichtungen 294 erfolgt eine Abdichtung zwischen zweitem Kupplungsteil 220 und Grundkörper 290a. Der Grundkörper 290a und der Auslauf 290b verfügen jeweils über eine zentrale Bohrung oder Öffnung, die koaxial zum Strömungskanal 224 im zweiten Kupplungsteil 220 sind und zusammen einen Kanal 292 im Auslaufkörper 290 bilden, der zu der hier nicht gezeigten Auslauföffnung des Auslaufkörper 290 führt.

Alternativ ist es auch möglich, dass das zweite Kupplungsteil 220 in den Grundkörper 290a eingeschraubt ist. Um auch hier ein drehfeste Verbindung zu sichern, werden ebenfalls weitere Fixierungselemente 293 verwendet.

Wie in Figur 4 erkennbar, verfügt das zweite Kupplungsteil 220 über eine Ringnut 264 mit innenliegenden Ringkontakten 261, 262 und 263. Die Anzahl der Kontakte ist nicht auf drei beschränkt, sondern kann auch zwei, vier, oder mehr betragen. Von den einzelnen Ringkontakten 261, 262, 263 führen elektrische Leitungen, beispielsweise in Form eines Kabels, zu einer Kontakteinheit 256, die an der Außenseite des zweiten Kupplungsteils 220 angeordnet ist und einen elektrischen Kontakt zum Grundkörper 290a vermittelt. Die Kontakteinheit 256 weist dazu Kontaktelemente im zweiten Kupplungsteil 220 und dazu korrespondierende Kontaktelemente im Grundkörper 290a. Diese sind über elektrische Leitungen 258, beispielsweise in Form eines Kabels, mit einzelnen Bedienelementen 271, 272, 273 einer Bedieneinheit 270 verbunden.

Die Bedieneinheit 270 ist an der Außenseite des Auslaufkörper 290, konkret hier des Grundkörpers 290a angeordnet, beispielsweise in das Material des Grundkörpers 290a integriert. Die Bedienelemente 271, 272, 273 der Bedieneinheit können Schalter, beispielsweise Folienschalter, oder Bereiche einer berührungsempfindlichen Oberfläche, beispielsweise auch in dem gleichen Material wie der Auslaufkörper selbst oder einer Glas- oder Kunststoffoberfläche, sein.

Die Bedieneinheit 270 ist somit mittels der Übertragungsanordnung 250, welche die Ringnut 264 mit den Ringkontakten 261, 262, 263 auf Seiten des zweiten Kupplungsteils 220 und den Kontaktring 251 auf Seiten des ersten Kupplungsteils 210 umfasst, und einer Signalleitung 226 mit der hier nicht gezeigten Mischeinrichtung verbunden. Die Mischeinheit kann daher sehr bequem direkt durch Berühren oder Betätigen der Bedieneinheit 270 gesteuert werden, beispielsweise zur Einstellung der Wassertemperatur und der durchfließenden Wassermenge.

Eine alternative Übertragungsanordnung 250a ist im unteren Bildbereich der Figur 4 gezeigt. Diese Übertragungsanordnung 250a ermöglicht eine kontaktlose Übertragung von Signalen durch induktive Kopplung einer konzentrisch zum Kupplungsstift 211 verlaufenden Spule 269 auf dem ersten Kupplungsteil 210 mit einer konzentrisch zur Kupplungsstiftaufnahme 221 verlaufenden Spule 268 im zweiten Kupplungsteil 220. Die Spule 269 kommt im Kupplungszustand in der Ringnut 267 zum Liegen und liegt daher der Spule 268 direkt gegenüber. Dadurch wird eine gute induktive Kopplung erreicht. Günstig bei dieser Variante ist, dass die Spulen 268, 269 vollständig verkapselt sein können und so keine blanken Kontakte im Kupplungsbereich vorliegen.

Mittels der Übertragungsanordnung 250a ist nicht nur eine Signalübertragung sondern auch eine Zufuhr von elektrischer Energie vom ersten Kupplungsteil 210 zum zweiten Kupplungsteil 222 möglich. Die Energieübertagung kann bei einer vergleichsweise geringen Frequenz im Gegensatz zur Signalübertagung erfolgen.

Alternativ kann die Übertragungsanordnung auch eine optische Signalübertragung ermöglichen. Beispielsweise kann anstelle der Spule 268 ein Acrylring oder Glasring integriert sein, der das optische Signal von einem Sender am ersten Kupplungsteil zu einem Empfänger führt und zwar unabhängig von der Drehstellung der beiden Kupplungsteile. Der Glasring liegt beispielsweise zur Ringnut 267 frei, damit eine optische Einkopplung von einem Sender 269, beispielsweise einer LED, OLED, oder Laser, möglich ist. Es ist natürlich auch möglich, einen Acrylring oder Glasring oder dergleichen am ersten Kupplungsteil oder an beiden vorzusehen. Im Falle einer optischen Übertragungsanordnung ist die Signalleitung ein Lichtwellenleiter. Die Verwendung einer optischen Übertragungsanordnung hat den Vorteil, dass keine Stromfluss auftritt. Da keine hochfrequenten Nutzsignale übertragen werden müssen, sondern lediglich Steuersignale im beispielsweise kHz-Bereich, ist die Qualität der optischen Kopplung vergleichsweise unkritisch.

Alternativ ist es möglich, eine Signalübertragung mittels Funktechnik basierend auf WLAN, Bluetooth oder Transpondertechnik zu verwenden. Dadurch ist eine Integration in eine drahtlose zentrale Haussteuerung oder Fernabfragesystem möglich.

Um die Signale und/oder Energie vom zweiten Kupplungsteil 220 auf den Auslaufkörper 290 zu übertragen, kann ebenfalls eine mit der Übertragungsanordnung 250a verbundene Kontakteinheit 257 vorgesehen sein, wie bereits weiter oben beschrieben. Die für die Signalgenerierung genutzte Elektronik 266, welche dann auch mit Energie versorgt wird, ist über ein Kabel 259 mit der Kontakteinheit 257 verbunden.

Figur 4 zeigt weiterhin eine Alternative hinsichtlich der Befestigung des ersten Kupplungsteils 210. Dieses ist hier mit seinem Flansch 213 auf die Oberseite der Sanitäreinrichtung 205 aufgesetzt und durchsetzt mit dem zulaufseitigen Anschluss 212 eine Öffnung in der Sanitäreinrichtung 205. Von unten wird dann der Zulauf mit dem zulaufseitigen Anschluss 212 verschraubt und das erste Kupplungsteil 210 damit an der Sanitäreinrichtung 205 fixiert.

Weiterhin können Dichtungen 218 am ersten Kupplungsteil 210, alternativ oder zusätzlich auch am zweiten Kupplungsteil 220, angeordnet werden.

Der Auslaufkörper 290 kann aus einem geeigneten Material, beispielsweise Metall, Kunststoff, Glas, Keramik oder einem Mineralwerkstoff bestehen. Es ist ebenfalls möglich, den Grundkörper 290a aus einem Material und den Auslauf 290b aus einem anderen Material zu formen.

Figur 5 zeigt die in Figur 4 dargestellte Wasserauslaufanordnung mit induktiver Kopplung in einer perspektivischen Explosionsdarstellung, jedoch ohne die Befestigung an einer Sanitäreinrichtung.

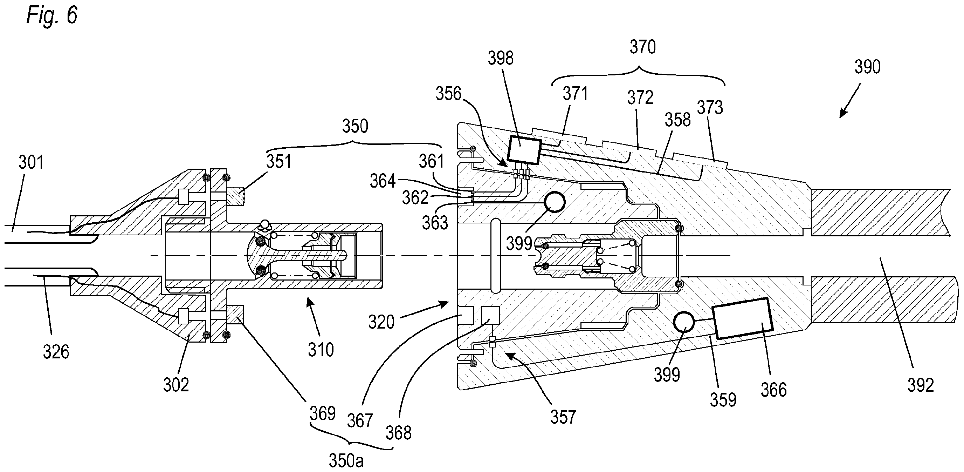

Figur 6 zeigt eine weitere Ausführungsform einer Wasserauslaufanordnung, hier am Beispiel einer Handbrause, die über eine Schnellkupplung mit einem Schlauch 301 verbunden ist.

Der Aufbau der Schnellkupplung kann grundsätzlich der gleiche sein wie bereits weiter oben beschrieben und umfasst ein erstes Kupplungsteil 310 und ein zweites Kupplungsteil 320. Das erste Kupplungsteil 310 verfügt über ein Gewinde, an dem ein Schlauch 301 mittels eines Adapters 302 angeschraubt ist. Der Adapter 302 stellt auch einen elektrischen Kontakt zwischen der in der Schlauchwand geführten Signalleitung 326 und dem Kontaktelement 351 oder der Spule 369 her.

Die Schnellkupplung kann daher entweder über eine kontaktbehaftete Übertragungsanordnung 350 mit Kontaktring 351 am ersten Kupplungsteil 310 und Ringnut 364 mit Ringkontakten 361, 362, 363 am zweiten Kupplungsteil 320, oder über eine kontaktlose Übertragungsanordnung 350a mit Spule 369 am ersten Kupplungsteil 310 und Ringnut 367 und Spule 368 am zweiten Kupplungsteil 320 verfügen. Alternativ können auch optische Übertragungsanordnungen verwendet werden. Ebenfalls können entsprechende Kontakteinheiten 356 bzw. 357 oder optische Kontakteinheiten vorgesehen sein.

Die Schlauch 301 kann mindestens eine Signalleitung 326 aufweisen und an seinem ersten Ende ein erstes Kupplungsteil 310 mit Übertragungsanordnung und an seinem zweiten Ende ein zweites Kupplungsteil 320 mit entsprechender Übertragungsanordnung aufweisen. Die Signalleitung 326 verbindet dann die Übertragungsanordnungen der Kupplungsteile 310, 320. Damit ist es möglich, durch Ankupplung des Schlauches 301 neben der Wasserverbindung auch eine Signalverbindung und/oder Stromzufuhr herzustellen. Wenn alle Kupplungsteile mit aufeinander abgestimmten Übertragungsanordnungen ausgestattet sind, kann die Signalübertragung problemlos auch bei einem modularen Aufbau der Sanitäreinrichtung hergestellt werden.

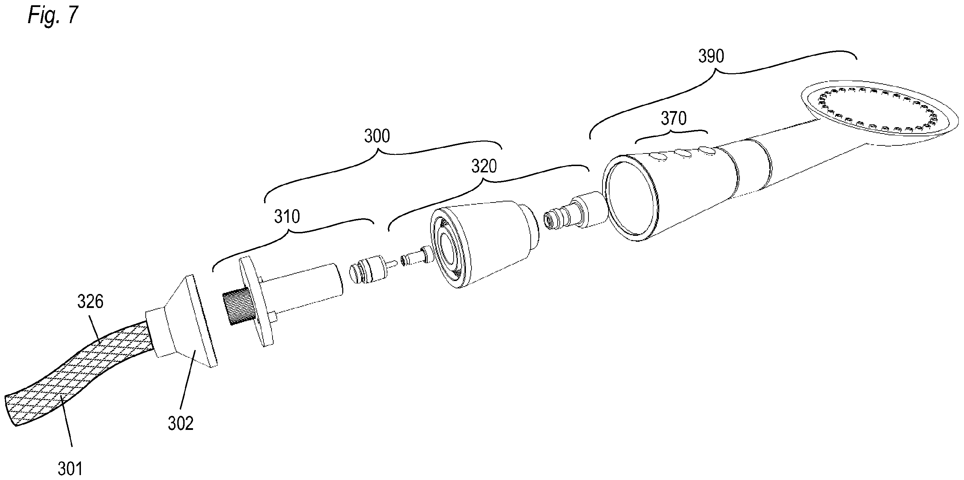

Die Signalleitung 326 kann als einfacher Draht, Mehrfachkabel, Drahtlitze, Folie, Einfach- oder Mehrfachdrahtgeflecht, oder Lichtwellenleiter ausgeführt sein. Figur 6 zeigt die Signalleitung beispielsweise als Draht. In Figur 7 ist dagegen eine Ausführung der Signalleitung 326 als Metallgeflecht oder leitendem Kunststoffgeflecht gezeigt.

Darüber hinaus können ein oder mehrere Messaufnehmer (Sensoren) 399, eine Kamera und/oder Scanner im zweiten Kupplungsteil 220 und/oder im Auslaufkörper 390 vorgesehen sein. Es ist auch möglich, einen oder mehrere Messaufnehmer im ersten Kupplungsteil 310 vorzusehen. Die Messaufnehmer 399 können entweder mit einer Elektronik 366 oder über eine Leitung oder Kabel 359, die Übertragungsanordnung 350, 350a und Signalleitung 326 mit der Steuereinheit in der Mischeinrichtung verbunden sein.

Der oder die Messaufnehmer können auch bei festinstalliertem ersten Kupplungsteil vorgesehen werden, entweder im ersten oder zweiten Kupplungsteil oder im Auslaufkörper.

Alternativ ist es möglich, eine Signalübertragung mittels Funktechnik basierend auf WLAN, Bluetooth oder Transpondertechnik zu verwenden. Dadurch ist eine Integration in eine drahtlose zentrale Haussteuerung oder Fernabfragesystem möglich. Beispielsweise kann dazu eine Kommunikationseinrichtung 398 vorgesehen werden, die beispielsweise im Auslaufkörper 390 oder auch im zweiten Kupplungsteil 320 integriert sein kann. Die Kommunikationseinrichtung 398 kann neben einer Fernabfrage auch zur Übermittlung der Bediensignale an die Mischeinrichtung verwendet werden. Zur Energieversorgung der Kommunikationseinrichtung 398 bietet sich auch die induktive Kopplung durch die Übertragungsanordnung 350a an, da hierdurch eine vergleichsweise einfache und zuverlässige Energieübertragung möglich ist.

Im Auslaufkörper 390 ist weiterhin eine Bedieneinheit 370 mit Bedienelementen 371, 372, 373 angeordnet, die beispielsweise über Kabel 358 mit der Kontakteinheit 356 und/oder Kommunikationseinrichtung 398 verbunden sein kann. Damit ist es möglich, die Wasserzufuhr und die Wassertemperatur direkt über Betätigung der Bedienelemente 371, 372, 373 zu steuern.

Der beispielsweise als Duschkopf ausgebildete Auslaufkörper 390 kann einen oder mehrere Kontakte (als Teil der kontaktbehafteten Übertragungsanordnung 350 oder der kontaktlosen Übertragungsanordnung 350a) zur Signalverarbeitung bzw. Signalübertragung aufweisen. Sämtliche hier beschriebenen Auslaufkörper können Sensoren und Schaltflächen, die die Auslaufmenge, Temperatur oder/und zeitliche Algorithmen für den Wasserdurchfluss steuern/regeln, enthalten. Die Sensoren können an jeder Stelle des Duschkopfes angebracht werden. Vorzugsweise jedoch auf der Seite, zu der die Duschkopfinnenseite weist, weil damit ein ergonomischer Einhandbetrieb ermöglicht wird.

Der als Handbrause oder Duschkopf ausgeführte Auslaufkörper 390 ist, wie weiter oben beschrieben, mit dem zweiten Kupplungsteil 320 verbunden. Der Auslaufkörper 390 weist ebenfalls einen Strömungskanal 392 auf, der in fluidischer Verbindung mit dem Strömungskanal des zweiten Kupplungsteils 320 steht.

Wie weiter oben beschrieben, kann der Auslaufkörper 390 ein- oder mehrteilig, und aus einem oder mehreren Materialien aufgebaut sein. Er kann sowohl aus verchromten oder veredeltem Messing, aus Edelstahl, aus Kunststoff, Keramik, Glas oder einem Mineralwerkstoff bestehen. Es können auch additive Fertigungsverfahren zur freien Formgestaltung des Auslaufkörpers 390, oder Teile davon, verwendet werden.

Figur 7 zeigt die Wasserauslaufanordnung gemäß Figur 6 in einer perspektivischen Ansicht zur besseren Verdeutlichung, wobei hier das Metallgeflecht des Schlauchs 301 gleichzeitig als Signalleitung 326 dient.

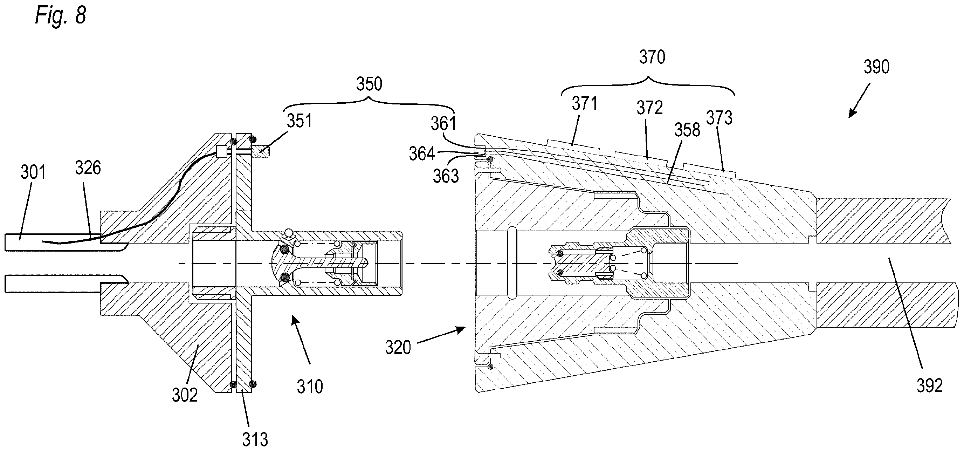

Figur 8 zeigt eine weitere Ausführungsform einer Wasserauslaufanordnung, die sich von der der Figuren 6 und 7 im Wesentlichen nur davon unterscheidet, dass die Übertragungsanordnung 350 hier direkt zwischen dem ersten Kupplungsteil 310 und dem Auslaufkörper 390 ausgebildet ist. Es werden daher keine Signale mehr über das zweite Kupplungsteil übertragen. Daher ist auch keine Kontakteinheit 356, 357 zwischen zweitem Kupplungsteil 320 und Auslaufkörper 390 erforderlich.

Die elektrische Signalübertragung zwischen erstem Kupplungsteil 310 und Auslaufkörper 390 kann kontaktbehaftet oder kontaktlos erfolgen. Im letzteren Fall wird beispielsweise eine Spule in den Auslaufkörper 390 integriert.

Im Folgenden werden Ausführungsformen anhand einzelner Ausführungsbeispiele aufgelistet.
Ausführungsbeispiel 1: Wasserauslaufanordnung, aufweisend:
   eine Schnellkupplungsvorrichtung mit einem ersten Kupplungsteil und einem zweiten Kupplungsteil, die mittels einer federbelasteten Kupplung lösbar miteinander verbindbar sind, wobei zum Kuppeln die beiden Kupplungsteile relativ zueinander längs einer Kupplungsachse bewegbar sind, bis die federbelastete Kupplung einrastet, die beiden Kupplungsteile in gekuppeltem Zustand bei eingerasteter Kupplung frei gegeneinander drehbar sind, und das erste Kupplungsteil einen Strömungskanal mit Ventil aufweist, das in gekuppeltem Zustand der beiden Kupplungsteile geöffnet und in entkuppeltem Zustand der beiden Kupplungsteile geschlossen ist; und
   einen Auslaufkörper der mit dem zweiten Kupplungsteil verbunden ist.
Ausführungsbeispiel 2: Wasserauslaufanordnung nach Ausführungsbeispiel 1, wobei die federbelastete Kupplung mindestens ein mittels eines Federelements vorgespanntes Rastelement aufweist, das im ersten oder zweiten Kupplungsteil gelagert ist und in gekuppeltem Zustand in eine umlaufende Aufnahme des anderen der beiden Kupplungsteile eingreift, um eine Relativbewegung der beiden Kupplungsteile zueinander in Richtung der Kupplungsachse zu sperren.
Ausführungsbeispiel 3: Wasserauslaufanordnung nach Ausführungsbeispiel 1 oder 2, wobei das Ventil des ersten Kupplungsteils einen axial bewegbaren Ventilkörper aufweist, der in ungekuppeltem Zustand der beiden Kupplungsteile federbelastet gegen einen im ersten Kupplungsteil angeordneten Ventilsitz drückt und in gekuppeltem Zustand der beiden Kupplungsteile durch das zweite Kupplungsteil aus seinem Ventilsitz gedrückt wird.
Ausführungsbeispiel 4: Wasserauslaufanordnung nach einem der Ausführungsbeispiele 1 bis 3, wobei das zweite Kupplungsteil einen Strömungskanal mit Ventil aufweist, das in gekuppeltem Zustand der beiden Kupplungsteile geöffnet und in entkuppeltem Zustand der beiden Kupplungsteile geschlossen ist.
Ausführungsbeispiel 5: Wasserauslaufanordnung nach Ausführungsbeispiel 4, wobei das Ventil des zweiten Kupplungsteils einen axial bewegbaren Ventilkörper aufweist, der in ungekuppeltem Zustand der beiden Kupplungsteile federbelastet gegen einen im zweiten Kupplungsteil angeordneten Ventilsitz drückt und in gekuppeltem Zustand der beiden Kupplungsteile durch das erste Kupplungsteil aus seinem Ventilsitz gedrückt wird.
Ausführungsbeispiel 6: Wasserauslaufanordnung nach einem der Ausführungsbeispiele 1 bis 5, wobei der Auslaufkörper mindestens eine Bedieneinheit aufweist, die mit einer Übertragungsanordnung zur Übertragung von Signalen zwischen den beiden Kupplungsteilen oder zwischen dem ersten Kupplungsteil und dem Auslaufkörper verbunden ist.
Ausführungsbeispiel 7: Wasserauslaufanordnung nach einem der Ausführungsbeispiele 1 bis 5, wobei der Auslaufkörper mindestens eine Bedieneinheit und/oder mindestens einen Sensor, Kamera und/oder Scanner aufweist, die mit einer Übertragungsanordnung zur Übertragung von Signalen zwischen den beiden Kupplungsteilen oder zwischen dem ersten Kupplungsteil und dem Auslaufkörper verbunden ist oder sind.
Ausführungsbeispiel 8: Wasserauslaufanordnung nach Ausführungsbeispiel 6 oder 7, wobei die Übertragungsanordnung mindestens ein Kontaktelement aufweist, das am ersten Kupplungsteil angeordnet ist und in gekuppeltem Zustand der Schnellkupplungsvorrichtung in eine Ringnut mit innenliegendem Kontakt eingreift, die im zweiten Kupplungsteil oder Auslaufkörper ausgebildet ist.
Ausführungsbeispiel 9: Wasserauslaufanordnung nach Ausführungsbeispiel 6 oder 7, wobei die Übertragungsanordnung zur kontaktlosen Übertragung der Signale zwischen erstem und zweitem Kupplungsteil oder/und zwischen erstem Kupplungsteil und Auslaufkörper ausgebildet.
Ausführungsbeispiel 10: Wasserauslaufanordnung nach einem der Ausführungsbeispiele 1 bis 9, weiterhin aufweisend eine Kommunikationseinrichtung zur Fernabfrage der Wasserauslaufanordnung.
Ausführungsbeispiel 11: Wasserauslaufanordnung nach einem der Ausführungsbeispiele 1 bis 10, wobei das erste Kupplungsteil einen Kupplungsstift, einen zulaufseitigen Anschluss und einen Flansch zwischen dem Kupplungsstift und dem zulaufseitigen Anschluss aufweist; und das zweite Kupplungssteil eine Kupplungsstiftaufnahme aufweist, in welcher der Kupplungsstift axial einführbar ist.
Ausführungsbeispiel 12: Wasserauslaufanordnung nach einem der Ausführungsbeispiele 1 bis 11, wobei der Auslaufkörper zumindest teilweise oder vollständig aus einem Mineralwerkstoff, keramischen Werkstoff, Glas, Metall, Kunststoff oder einem Verbund aus mindestens zwei der genannten Materialien besteht.
Ausführungsbeispiel 13: Sanitäreinrichtung, aufweisend: ein Sanitärbecken; eine Wasserauslaufanordnung nach einem der Ausführungsbeispiele 1 bis 12; und eine Mischeinrichtung, die zumindest einen ersten Zulauf, einen zweiten Zulauf, und mindestens einen Mischwasserablauf aufweist, wobei das erste Kupplungsteil der Schnellkupplungsvorrichtung der Wasserauslaufanordnung mit dem Mischwasserablauf der Mischeinrichtung verbunden ist.
Ausführungsbeispiel 14: Sanitäreinrichtung nach Ausführungsbeispiel 13, wobei die Mischeinrichtung weiterhin einen Steueranschluss aufweist, der mit dem Kontaktelement des ersten Kupplungsteils zur Übertragung von Signalen verbunden ist.
Ausführungsbeispiel 15: Sanitäreinrichtung, aufweisend: einen Schlauch, der an einem Ende ein erstes Kupplungsteil nach einem der Ausführungsbeispiele 1 bis 12 aufweist; und eine Handbrause, welche einen mit einem zweiten Kupplungsteil verbundenen Auslaufkörper bildet.
Ausführungsbeispiel 16: Sanitäreinrichtung nach Ausführungsbeispiel 15, wobei der Schlauch mindestens eine Signalleitung aufweist, welche mit dem Kontaktelement des ersten Kupplungsteils zur Strom- und/oder Signalübertragung verbunden ist.
Ausführungsbeispiel 17: Sanitäreinrichtung nach einem der Ausführungsbeispiele 13 bis 16, weiterhin aufweisend eine Kommunikationseinrichtung zur Fernabfrage der Mischeinrichtung.
Ausführungsbeispiel 18: Schnellkupplungsvorrichtung, aufweisend:
   ein erstes Kupplungsteil und ein zweites Kupplungsteil, die mittels einer federbelasteten Kupplung lösbar miteinander verbindbar sind, wobei zum Kuppeln die beiden Kupplungsteile relativ zueinander längs einer Kupplungsachse bewegbar sind, bis die federbelastete Kupplung einrastet, die beiden Kupplungsteile in gekuppeltem Zustand bei eingerasteter Kupplung frei gegeneinander drehbar sind, und das erste Kupplungsteil einen Strömungskanal mit Ventil aufweist, das in gekuppeltem Zustand der beiden Kupplungsteile geöffnet und in entkuppeltem Zustand der beiden Kupplungsteile geschlossen ist; und
   eine Übertragungsanordnung zur Übertragung von Signalen zwischen den beiden Kupplungsteilen.
Ausführungsbeispiel 19: Schnellkupplungsvorrichtung nach Ausführungsbeispiel 18, wobei die Übertragungsanordnung mindestens ein Kontaktelement aufweist, das am ersten Kupplungsteil angeordnet ist und in gekuppeltem Zustand der Schnellkupplungsvorrichtung in eine Ringnut mit innenliegendem Kontakt eingreift, die im zweiten Kupplungsteil ausgebildet ist.
Ausführungsbeispiel 20: Schnellkupplungsvorrichtung nach Ausführungsbeispiel 18 oder 19, wobei die Übertragungsanordnung zur kontaktlosen Übertragung der Signale zwischen erstem und zweitem Kupplungsteil ausgebildet ist.
Ausführungsbeispiel 21: Schnellkupplungsvorrichtung nach einem der Ausführungsbeispiele 18 bis 20, wobei das zweite Kupplungsteil mindestens eine Kontakteinheit aufweist, die mit der Übertragungsanordnung verbunden ist.
Ausführungsbeispiel 22: Wasserschlauch, der an seinem ersten Schlauchende ein erstes Kupplungsteil und an seinem zweiten Schlauchende ein zweites Kupplungsteil einer Schnellkupplungsvorrichtung nach einem der Ausführungsbeispiele 18 bis 21 aufweist.
Ausführungsbeispiel 23: Wasserschlauch nach Ausführungsbeispiel 22, wobei der Wasserschlauch mindestens eine Signalleitung aufweist, die beispielsweise als Metallgeflecht, Kabel, Draht, Folie, Litze oder Lichtwellenleiter ausgeführt ist, wobei die Signalleitung die Übertragungsanordnung der jeweiligen Kupplungsteile miteinander verbindet.
Ausführungsbeispiel 24: Wasserschlauch nach Ausführungsbeispiel 22 oder 23, weiterhin umfassend jeweils einen Adapter zum Verbinden des jeweiligen Schauchendes mit dem jeweiligen Kupplungsteil.

Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Erfindung abzuweichen. Die nachfolgenden Ansprüche stellen einen ersten, nicht bindenden Versuch dar, die Erfindung allgemein zu definieren.

### Bezugszeichenliste

- 100: Wasserauslaufanordnung
- 110: Sanitäreinrichtung / Waschbecken
- 120: Mischeinrichtung
- 121: erster Zulauf / Kaltwasserzulauf
- 122: zweiter Zulauf / Warmwasserzulauf
- 123, 124, 125: Mischwasserzulauf
- 126, 226, 326: Signalleitung
- 126a: Steuereingang
- 127: Steuereinrichtung
- 128: Kommunikationseinrichtung
- 129: Sensor/ Messaufnehmer
- 150: Schnellkupplung / Steckkupplung
- 190, 290, 390: Auslaufkörper
- 191: Auslauföffnung
- 192: Kanal
- 200, 300: Schnellkupplung
- 205: Sanitäreinrichtung
- 210, 310: erstes Kupplungsteil
- 211: Kupplungsstift
- 212: zulaufseitiger Anschluss
- 213, 313: Flansch
- 214: Strömungskanal
- 218: Dichtung
- 220, 320: zweites Kupplungsteil
- 221: Kupplungsstiftaufnahme
- 224: Strömungskanal
- 225: Körper
- 230: Ventil
- 231: Ventilkörper
- 232: Ventilsitz
- 233: Ringdichtung
- 234: Feder
- 236: Ventilstößel
- 241: Rastelement
- 242: Rastelementaufnahme
- 250, 250a, 350, 350a: Übertragungsanordnung
- 251, 351: Kontaktelement / Kontaktring
- 252: Kontaktelement / Kontaktstift
- 255: Ringnut mit Kontakt
- 256, 257, 356, 357: Kontakteinheit
- 258, 358, 259, 359: Kabel
- 261, 262, 263, 361, 362, 363: Ringkontakte
- 264, 364: Ringnut
- 266, 366: Elektronik
- 267, 367: Ringnut
- 268, 269, 368, 369: Spule
- 270, 370: Bedieneinheit
- 271, 272, 273, 371, 372, 373: Bedienelement
- 280: Ventil
- 281: Ventilkörper
- 282: Ventilsitz
- 283: Ringdichtung
- 284: Feder
- 285: Ventileinsatz
- 290, 390: Auslaufkörper
- 290a: Grundkörper
- 290b: Auslauf
- 292, 392: Kanal
- 293: Fixierungselement
- 294: Dichtung
- 295, 395: Aufnahme für Schnellkupplung
- 301: Schlauch
- 302: Adapter
- 398: Kommunikationseinrichtung
- 399: Messaufnehmer

## Patentansprüche

1. Wasserauslaufanordnung, aufweisend:
eine Schnellkupplungsvorrichtung (200, 300) mit einem ersten Kupplungsteil (210, 310) und einem zweiten Kupplungsteil (220, 320), die mittels einer federbelasteten Kupplung (241, 242) lösbar miteinander verbindbar sind, wobei
zum Kuppeln die beiden Kupplungsteile (210, 220, 310, 320) relativ zueinander längs einer Kupplungsachse bewegbar sind, bis die federbelastete Kupplung (241, 242) einrastet,
die beiden Kupplungsteile (210, 220, 310, 320) in gekuppeltem Zustand bei eingerasteter Kupplung (241, 242) frei gegeneinander drehbar sind, und
das erste Kupplungsteil (210, 310) einen Strömungskanal (214) mit Ventil (230) aufweist, das in gekuppeltem Zustand der beiden Kupplungsteile (210, 220, 310, 320) geöffnet und in entkuppeltem Zustand der beiden Kupplungsteile (210, 220, 310, 320) geschlossen ist;
wobei die federbelastete Kupplung (241, 242) mindestens ein mittels eines Federelements vorgespanntes Rastelement (241) aufweist, das im ersten oder zweiten Kupplungsteil (210, 220, 310, 320) gelagert ist und in gekuppeltem Zustand in eine umlaufende Aufnahme (242) des anderen der beiden Kupplungsteile (220, 210) eingreift, um eine Relativbewegung der beiden Kupplungsteile (210, 220, 310, 320) zueinander in Richtung der Kupplungsachse zu sperren, und
einen Auslaufkörper (190, 290, 390) der mit dem zweiten Kupplungsteil (220, 320) lösbar verbunden ist, wobei das zweite Kupplungsteil in den Auslaufkörper eingesetzt ist,
wobei der Auslaufkörper (190) mindestens eine Bedieneinheit (270, 370) und/oder mindestens einen Sensor, Kamera und/oder Scanner aufweist, die mit einer Übertragungsanordnung (250, 250a, 350, 350a) zur Übertragung von Signalen zwischen den beiden Kupplungsteilen (210, 220, 310, 320) oder zwischen dem ersten Kupplungsteil (210, 310) und dem Auslaufkörper (190, 290, 390) verbunden ist oder sind.

2. Wasserauslaufanordnung nach Anspruch 1, wobei das Ventil (230) des ersten Kupplungsteils (210) einen in Richtung der Kupplungsachse axial bewegbaren Ventilkörper (231) aufweist, der in ungekuppeltem Zustand der beiden Kupplungsteile (210, 220, 310, 320) federbelastet gegen einen im ersten Kupplungsteil (210) angeordneten Ventilsitz (232) drückt und in gekuppeltem Zustand der beiden Kupplungsteile (210, 220, 310, 320) durch das zweite Kupplungsteil (220) aus seinem Ventilsitz (232) gedrückt wird.

3. Wasserauslaufanordnung nach einem der vorherigen Ansprüche, wobei das zweite Kupplungsteil (220) einen Strömungskanal (224) mit Ventil (280) aufweist, das in gekuppeltem Zustand der beiden Kupplungsteile (210, 220, 310, 320) geöffnet und in entkuppeltem Zustand der beiden Kupplungsteile (210, 220, 310, 320) geschlossen ist.

4. Wasserauslaufanordnung nach einem der vorherigen Ansprüche,
wobei die Übertragungsanordnung (250, 250a, 350, 350a) mindestens ein Kontaktelement (251, 252) aufweist, das am ersten Kupplungsteil (210, 310) angeordnet ist und in gekuppeltem Zustand der Schnellkupplungsvorrichtung (200, 300) in eine Ringnut (255, 364) mit innenliegendem Kontakt eingreift, die im zweiten Kupplungsteil (220, 320) oder Auslaufkörper (190, 290, 390) ausgebildet ist,
oder
wobei die Übertragungsanordnung (250a, 350, 350a) zur kontaktlosen Übertragung der Signale zwischen erstem und zweitem Kupplungsteil (210, 220, 310, 320) oder/und zwischen erstem Kupplungsteil (210, 310) und Auslaufkörper (190, 290, 390) ausgebildet ist.

5. Wasserauslaufanordnung nach einem der vorherigen Ansprüche, weiterhin aufweisend eine Kommunikationseinrichtung (398) zur Fernabfrage der Wasserauslaufanordnung.

6. Sanitäreinrichtung, aufweisend:
ein Sanitärbecken (110);
eine Wasserauslaufanordnung nach einem der Ansprüche 1 bis 5; und
eine Mischeinrichtung (120), die zumindest einen ersten Zulauf (122), einen zweiten Zulauf (121), und mindestens einen Mischwasserablauf (125) aufweist, wobei das erste Kupplungsteil (210) der Schnellkupplungsvorrichtung (200) der Wasserauslaufanordnung mit dem Mischwasserablauf (125) der Mischeinrichtung (120) verbunden ist.

7. Sanitäreinrichtung nach Anspruch 6,
wobei die Mischeinrichtung (120) weiterhin einen Steueranschluss aufweist, der mit dem oder einem Kontaktelement (251, 252) des ersten Kupplungsteils (210) zur Übertragung von Signalen verbunden ist,
und/oder
wobei die Sanitäreinrichtung weiterhin eine optionale Kommunikationseinrichtung (128) zur Fernabfrage der Mischeinrichtung (120) aufweist.

8. Sanitäreinrichtung, aufweisend:
eine Wasserauslaufanordnung nach einem der Ansprüche 1 bis 5;
einen Schlauch (301), der an einem Ende das erste Kupplungsteil (310) der Wasserauslaufanordnung aufweist; und
eine Handbrause (390), welche mit dem zweiten Kupplungsteil (320) der Wasserauslaufanordnung verbunden ist und den Auslaufkörper der Wasserauslaufanordnung bildet.

9. Sanitäreinrichtung nach Anspruch 8, wobei der Schlauch (301) mindestens eine Signalleitung (326) aufweist, welche mit dem oder einem Kontaktelement (351, 369) des ersten Kupplungsteils (310) zur Strom- und/oder Signalübertragung verbunden ist.

## Claims

1. Water outlet assembly, having:
a quick coupling device (200, 300) with a first coupling portion (210, 310) and a second coupling portion (220, 320) which can be releasably connected to each other by means of a spring-loaded coupling (241, 242), wherein,
for coupling, the two coupling portions (210, 220, 310, 320) are movable relative to each other along a coupling axis until the spring-loaded coupling (241, 242) latches,
the two coupling portions (210, 220, 310, 320) in the coupled state when the coupling (241, 242) is latched are freely rotatable in opposite directions, and the first coupling portion (210, 310) has a flow channel (214) with valve (230) which is opened in the coupled state of the two coupling portions (210, 220, 310, 320) and closed in the uncoupled state of the two coupling portions (210, 220, 310, 320);
wherein the spring-loaded coupling (241, 242) has at least one latch element (241) which is biased by means of a spring element and mounted in the first or second coupling portion (210, 220, 310, 320) and in the coupled state engages in a peripheral receptacle (242) of the other of the two coupling portions (220, 210), in order to block a relative movement of the two coupling portions (210, 220, 310, 320) to each other in the direction of the coupling axis, and
an outlet body (190, 290, 390) which is releasably connected to the second coupling portion (220, 320), wherein the second coupling portion is inserted in the outlet body,
wherein the outlet body (190) has at least one control unit (270, 370) and/or at least one sensor, camera and/or scanner which is or are releasably connected to a transmission assembly (250, 250a, 350, 350a) for the transmission of signals between the two coupling portions (210, 220, 310, 320) or between the first coupling portion (210, 310) and the outlet body (190, 290, 390).

2. Water outlet assembly according to claim 1, wherein the valve (230) of the first coupling portion (210) has a valve body (231) which is axially movable in the direction of the coupling axis and which, in the uncoupled state of the two coupling portions (210, 220, 310, 320), presses under spring load against a valve seat (232) arranged in the first coupling portion (210) and, in the coupled state of the two coupling portions (210, 220, 310, 320), is pressed out of its valve seat (232) by the second coupling portion (220).

3. Water outlet assembly according to one of the preceding claims, wherein the second coupling portion (220) has a flow channel (224) with valve (280) which is opened in the coupled state of the two coupling portions (210, 220, 310, 320) and closed in the uncoupled state of the two coupling portions (210, 220, 310, 320).

4. Water outlet assembly according to one of the preceding claims,
wherein the transmission assembly (250, 250a, 350, 350a) has at least one contact element (251, 252) which is arranged on the first coupling portion (210, 310) and, in the coupled state of the quick coupling device (200, 300), engages in an annular groove (255, 364) with contact on the inside which is formed in the second coupling portion (220, 320) or outlet body (190, 290, 390),
or
wherein the transmission assembly (250a, 350, 350a) is designed for contactless transmission of the signals between first and second coupling portions (210, 220, 310, 320) and/or between first coupling portion (210, 310) and outlet body (190, 290, 390).

5. Water outlet assembly according to one of the preceding claims, further having a communication device (398) for remote retrieval from the water outlet assembly.

6. Sanitary installation, having:
a basin (110);
a water outlet assembly according to one of claims 1 to 5; and
a mixing device (120) which has at least one first inlet (122), a second inlet (121), and at least one mixed water outlet (125), wherein the first coupling portion (210) of the quick coupling device (200) of the water outlet assembly is connected to the mixed water outlet (125) of the mixing device (120).

7. Sanitary installation according to claim 6,
wherein the mixing device (120) further has a control terminal which is connected to the or a contact element (251, 252) of the first coupling portion (210) for the transmission of signals,
and/or
wherein the sanitary installation further has an optional communication device (128) for remote retrieval from the mixing device (120).

8. Sanitary installation, having:
a water outlet assembly according to one of claims 1 to 5;
a hose (301) which has the first coupling portion (310) of the water outlet assembly at one end; and
a hand-held shower (390) which is connected to the second coupling portion (320) of the water outlet assembly and forms the outlet body of the water outlet assembly.

9. Sanitary installation according to claim 8, wherein the hose (301) has at least one signal wire (326) which is connected to the or a contact element (351, 369) of the first coupling portion (310) for the transmission of current and/or signals.

## Revendications

1. Agencement de sortie d'écoulement d'eau, comprenant :
un dispositif de raccord rapide (200, 300) avec une première partie de raccord (210, 310) et une deuxième partie de raccord (220, 320), qui peuvent être reliées mutuellement au moyen d'un accouplement (241, 242) chargé par ressort, dispositif dans lequel
pour produire le couplage, les deux parties de raccord (210, 220, 310, 320) peuvent être déplacées l'une par rapport à l'autre le long d'un axe de couplage, jusqu'à l'enclenchement de l'accouplement (241, 242) chargé par ressort,
dans l'état couplé, lorsque l'accouplement (241, 242) est enclenché, les deux parties de raccord (210, 220, 310, 320) peuvent tourner librement l'une par rapport à l'autre, et
la première partie de raccord (210, 310) comporte un canal d'écoulement (214) avec une valve (230), qui est ouverte dans l'état couplé des deux parties de raccord (210, 220, 310, 320), et est fermée dans l'état découplé des deux parties de raccord (210, 220, 310, 320) ;
dans lequel l'accouplement (241, 242) chargé par ressort comporte au moins un élément d'enclenchement (241) précontraint par ressort, qui est monté dans la première ou la deuxième partie de raccord (210, 220, 310, 320), et qui, dans l'état couplé, vient en prise dans un logement d'accueil périphérique (242) de l'autre des deux parties de raccord (220, 210), pour bloquer un mouvement relatif des deux parties de raccord (210, 220, 310, 320) l'une par rapport à l'autre dans la direction de l'axe de couplage, et
un corps de sortie d'écoulement (190, 290, 390) qui est relié de manière amovible à la deuxième partie de raccord (220, 320), la deuxième partie de raccord étant insérée dans le corps de sortie d'écoulement,
l'agencement étant tel que le corps de sortie d'écoulement (190) comporte au moins une unité de commande (270, 370) et/ou au moins un capteur, une caméra et/ou un scanner, qui est ou sont reliés à un agencement de transmission (250, 250a, 350, 350a) pour la transmission de signaux entre les deux parties de raccord (210, 220, 310, 320) ou entre la première partie de raccord (210, 310) et le corps de sortie d'écoulement (190, 290, 390).

2. Agencement de sortie d'écoulement d'eau selon la revendication 1, dans lequel la valve (230) de la première partie de raccord (210) comprend un corps d'obturation de valve (231) axialement mobile dans la direction de l'axe de couplage et qui, dans l'état non couplé des deux parties de raccord (210, 220, 310, 320), est pressé sous charge de ressort, contre un siège de valve (232) agencé dans la première partie de raccord (210), et, dans l'état couplé des deux parties de raccord (210, 220, 310, 320), est pressé hors de son siège de valve (232) par la deuxième partie de raccord (220).

3. Agencement de sortie d'écoulement d'eau selon l'une des revendications précédentes, dans lequel la deuxième partie de raccord (220) comporte un canal d'écoulement (224) avec une valve (280) qui est ouverte dans l'état couplé des deux parties de raccord (210, 220, 310, 320), et est fermée dans l'état non couplé des deux parties de raccord (210, 220, 310, 320).

4. Agencement de sortie d'écoulement d'eau selon l'une des revendications précédentes,
dans lequel l'agencement de transmission (250, 250a, 350, 350a) comporte au moins un élément de contact (251, 252), qui est agencé sur la première partie de raccord (210, 310), et qui, dans l'état couplé du dispositif de raccord rapide (200, 300), s'engage dans une rainure annulaire (255, 364) à contact intérieur, qui est réalisée dans la deuxième partie de raccord (220, 320) ou le corps de sortie d'écoulement (190, 290, 390),
ou
dans lequel l'agencement de transmission (250, 250a, 350, 350a) est configuré pour assurer la transmission, sans contact, de signaux entre la première et la deuxième partie de raccord (210, 220, 310, 320) ou/et entre la première partie de raccord (210, 310) et le corps de sortie d'écoulement (190, 290, 390).

5. Agencement de sortie d'écoulement d'eau selon l'une des revendications précédentes, comprenant par ailleurs un dispositif de communications (398) pour assurer une interrogation à distance de l'agencement de sortie d'écoulement d'eau.

6. Ensemble sanitaire comprenant :
un bac ou receveur sanitaire (110) ;
un agencement de sortie d'écoulement d'eau selon l'une des revendications 1 à 5 ; et
un dispositif mélangeur (120) comprenant au moins une première arrivée (122), une deuxième arrivée (121), et au moins une sortie d'écoulement d'eau mélangée (125), ensemble
dans lequel la première partie de raccord (210) du dispositif de raccord rapide (200) de l'agencement de sortie d'écoulement d'eau, est reliée à la sortie d'écoulement d'eau mélangée (125) du dispositif mélangeur (120).

7. Ensemble sanitaire selon la revendication 6,
dans lequel le dispositif mélangeur (120) comprend par ailleurs un branchement de commande, qui est relié au ou à un élément de contact (251, 252) de la première partie de raccord (210) pour la transmission de signaux,
et/ou
dans lequel l'ensemble sanitaire comprend par ailleurs un dispositif de communications (128) optionnel pour l'interrogation à distance du dispositif mélangeur (120).

8. Ensemble sanitaire comprenant :
un agencement de sortie d'écoulement d'eau selon l'une des revendications 1 à 5 ;
un tuyau flexible (301) qui présente, à une de ses extrémités, la première partie de raccord (310) de l'agencement de sortie d'écoulement d'eau ; et
une douchette à main (390), qui est reliée à la deuxième partie de raccord (320) de l'agencement de sortie d'écoulement d'eau, et forme le corps de sortie d'écoulement de l'agencement de sortie d'écoulement d'eau.

9. Ensemble sanitaire selon la revendication 8, dans lequel le tuyau flexible (301) comporte au moins un conducteur de transmission de signal (326), qui est relié au ou à un élément de contact (351, 369) de la première partie de raccord (310), pour la transmission de courant et/ou de signaux.
